# EUROPEAN PATENT SPECIFICATION

(11) **EP 4 048 707 B1**
(45) Date of publication and mention of the grant of the patent: **18.10.2023**
(21) Application number: 20807871.7
(22) Date of filing: 23.10.2020
(51) Int. Cl.: C08C 19/44, B60C 1/00, C08K 3/36, C08K 9/06

(54) **ELASTOMERIC COMPOSITION FOR VEHICLE WHEELS TYRE COMPOUNDS AND TYRES COMPRISING THE SAME**
ELASTOMERE ZUSAMMENSETZUNG FÜR REIFENMISCHUNGEN FÜR FAHRZEUGRÄDER UND REIFEN DAMIT
COMPOSITION ÉLASTOMÈRE POUR DES COMPOSÉS DE PNEUS DE ROUES DE VÉHICULE ET PNEUS LES COMPRENANT

(30) Priority: 25.10.2019 IT 201900019795
(43) Date of publication of application: 31.08.2022
(73) Proprietor: Pirelli Tyre S.p.A., 20126 Milano (IT)
(72) Inventor: NAPOLITANO, Luca, 20126 Milano (IT); NARDI, Andrea, 20126 Milano (IT); PARAZZOLI, Francesco, 20126 Milano (IT)
(74) Representative: PGA S.p.A.
(86) International application number: PCT/IB2020/059964
(87) International publication number: WO 2021/079326

(56) References cited:
- DATABASE WPI Week 200977 Thomson Scientific, London, GB; AN 2009-Q99532 XP002799399, & JP 2009 263530 A (BRIDGESTONE CORP) 12 November 2009 (2009-11-12)
- DATABASE WPI Week 201401 Thomson Scientific, London, GB; AN 2013-W68982 XP002799400, & JP 2013 245247 A (ASAHI KASEI CORP) 9 December 2013 (2013-12-09)
- DATABASE WPI Week 201706 Thomson Scientific, London, GB; AN 2017-00215M XP002799401, & JP 2016 222846 A (BRIDGESTONE CORP) 28 December 2016 (2016-12-28)
- DATABASE WPI Week 201235 Thomson Scientific, London, GB; AN 2012-F68129 XP002799402, & JP 2012 092166 A (TOYO RUBBER IND CO LTD) 17 May 2012 (2012-05-17)

## Description

### FIELD OF THE INVENTION

The present invention relates to new elastomeric compositions for vehicle wheels tyre compounds which, incorporated in their components, in particular in the tread, have an optimal balance between tensile and dynamic properties.

These new compositions comprise a particular silica and special modified polymers and impart to the tyres better performance on wet and, at the same time, good resistance to wear and tear.

### PRIOR ART

Tyre manufacturers, especially high-performance tyres, increasingly need to produce products with better characteristics on wet and, at the same time, good wear and tear resistance at all temperatures.

One of the solutions commonly adopted to meet this need is to incorporate silica into formulations for treads.

In addition to providing excellent reinforcement, silica also imparts superior wet grip and is widely used in HP (high performance) and UHP (ultrahigh performance) tyres for both passenger cars and motorcycles, in summer, winter and all-season applications.

Typically, highly dispersible commercial silicas are used in tyre tread compounds, generally with a high surface area (BET).

Polymers modified with polar groups are sometimes used in the compounds to improve the interaction between the polymeric phase and the silica and thus reduce the rolling resistance of the tread.

For example, in the patents in the name of Ashai US8816014, US8946339, US9193807, US9644046,JP2013245247 and in the patents in the name of JSR US9434792 and US9090754 and in the name of Bridgestone JP2013245247 and in the name of Toyo JP2012092166, modified polymers are described which interacting with the silica, would increase the dispersibility thereof in the elastomeric material. The recommended and tested silicas are conventional silicas, not derivatized, with surface areas (BET) ranging from 100 to 300 m²/g.

### SUMMARY OF THE INVENTION

The Applicant has undertaken studies on elastomeric compounds for treads in order to further improve the balance of their properties, i.e. better wet performance, high wear and tear resistance and good manoeuvrability, especially in challenging applications such as HP and UHP tyres, particularly in sports and racing motorcycle applications.

The Applicant has surprisingly found that by suitably selecting the type of modified polymer and the type of silica to be incorporated in the elastomeric material, it is possible to obtain improved compositions.

When incorporated into the tread, these new compositions - which include modified polymers at the terminations with organosilane groups and particular sulfur derivatized silicas having a total surface area (BET) lower than 190 m²/g - impart better performance on the wet and at the same time high wear and tear resistance, as well as stable static performance.

A first aspect of the present invention is therefore an elastomeric composition for vehicle wheels tyre compounds comprising
100 phr of at least one diene elastomeric polymer (A) of which at least 10 phr of at least one modified diene elastomeric polymer (A1),
at least 5 phr of at least one sulfurized silanized silica (B),
at least 0,1 phr of at least one vulcanising agent (C),
wherein said modified diene elastomeric polymer (A1) is a diene elastomeric polymer terminated with at least one organosilane group, said organosilane group being silicon substituted with an organic residue comprising at least one heteroatom selected from nitrogen, phosphorus and sulfur, and with at least one alkoxyl and/or with at least one alkyl, and
wherein said silanized sulfurized silica (B) has a surface area (BET) lower than 190 m²/g measured according to ISO18852.

A further aspect of the present invention is an elastomeric compound for tyres for vehicle wheels, green or at least partially vulcanized obtained by mixing and possibly vulcanizing the elastomeric composition according to the invention.

A further aspect of the present invention is a tyre component for vehicle wheels comprising, or preferably consisting of, a green or at least partially vulcanized elastomeric compound, according to the invention.

A further aspect of the present invention is a tyre for vehicle wheels comprising at least one component of a tyre according to the invention.

### DEFINITIONS

High and very high performance tyres, commonly referred to as "HP" (High Performance) or "UHP" (Ultra High Performance) tyres, or tyres for "HP applications" or "UHP" applications respectively, are in particular those that allow reaching speeds above 200 km/h, up to over 300 km/h. Examples of these tyres are those belonging to the classes "T", "U", "H", "V", "Z", "ZR", "W", "Y", according to the ETRTO - European Tyre and Rim standard Technical Organization - and racing tyres.

In particular, but not exclusively, the present invention relates to tyres intended to be mounted on the wheels of motorcycles, preferably of motorcycles with medium-high displacement (for example 400 cm³ or higher), and/or medium-high power (for example about 80-90 kW or higher) usable both on the road and on the track.

The term "elastomeric composition for tyres" means a composition comprising at least one diene elastomeric polymer and one or more additives, which by mixing and possible heating provides an elastomeric compound suitable for use in tyre components for vehicle wheels.

The components of the elastomeric composition are not generally introduced simultaneously into the mixer but typically added in sequence. In particular, the vulcanisation additives, such as the vulcanising agent and possibly the accelerant and retardant agents, are usually added in a downstream step with respect to the incorporation and processing of all the other components.

In the vulcanisable elastomeric compound, the individual components of the elastomeric composition may be altered or no longer individually traceable as they are modified, completely or in part, due to the interaction with the other components, of heat and/or mechanical processing. The term "elastomeric composition" herein is meant to include the set of all the components that are used in the preparation of the elastomeric compound, regardless of whether they are actually present simultaneously, are introduced sequentially or are then traceable in the elastomeric compound or in the final tyre.

The term "elastomeric compound" indicates the compound obtainable by mixing and possibly heating at least one elastomeric polymer with at least one of the additives commonly used in the preparation of tyre compounds for vehicle wheels.

The term "non-vulcanisable elastomeric compound" indicates the compound obtainable by mixing and possibly heating at least one elastomeric polymer with at least one of the additives commonly used in the preparation of tyre compounds, with the exception of vulcanising agents.

The term "vulcanisable elastomeric compound" indicates the elastomeric compound ready for vulcanisation, obtainable by incorporation into a non-vulcanisable elastomeric compound of all the additives, including those of vulcanisation.

The term "vulcanised elastomeric compound" means the material obtainable by vulcanisation of a vulcanisable elastomeric compound.

The term "green" indicates a material, a compound, a composition, a component or a tyre not yet vulcanised.

The term "elastomeric polymer" indicates a natural or synthetic polymer which, after vulcanisation, can be stretched repeatedly at room temperature to at least twice its original length and after removal of the tensile load substantially immediately returns with force to approximately its original length (according to the definitions of the ASTM D1566-11 Standard terminology relating to Rubber).

The term "diene elastomeric polymer" indicates an elastomeric polymer derived from the polymerization of one or more monomers, of which at least one is a conjugated diene.

The term "modified diene elastomeric polymer" indicates a diene elastomeric polymer modified by one or more functional groups at the terminations of the polymer chain.

The term "sulfur silanizing agent" indicates an organic derivative of silicon containing mercapto, sulphide, disulfide or polysulphide groups, said derivative being able to react with the OH groups of silica.

The term "reinforcing filler" indicates a reinforcing material typically used in the sector to improve the mechanical properties of tyre rubbers, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

The term "white filler" indicates a conventional reinforcing material used in the sector selected from among conventional silica and silicates, such as sepiolite, paligorskite also known as attapulgite, montmorillonite, alloisite and the like, possibly modified by acid treatment and/or derivatised. Typically, white fillers have surface hydroxyl groups.

The term "vulcanising agent" indicates a product capable of transforming natural or synthetic rubber into elastic and resistant material due to the formation of a three-dimensional network of inter- and intra-molecular bonds.

The term "vulcanisation accelerant" indicates a product capable of decreasing the duration of the vulcanisation process and/or the operating temperature, such as TBBS.

The term "vulcanisation activator" indicates a product capable of further facilitating the vulcanisation, making it happen in shorter times and possibly at lower temperatures. An example of activating agent is the stearic acid-zinc oxide system. The term "vulcanisation retardant", also referred to as "early cross-linking inhibitor", indicates a product capable of delaying the onset of the vulcanisation reaction and/or suppressing undesired secondary reactions, for example N-(cyclohexylthio)phthalimide (CTP).

The term "vulcanisation package" indicates the vulcanising agent and one or more vulcanisation additives selected from among vulcanisation activators, accelerants and retardants.

The term "mixing step (1)" indicates the step of the production process of the elastomeric compound in which one or more additives can be incorporated by mixing and possibly heating, except for the vulcanising agent which is fed in step (2). The mixing step (1) is also referred to as "non-productive step".

The term "mixing step (2)" indicates the next step of the production process of the elastomeric compound in which the vulcanising agent and, possibly, the other additives of the vulcanisation package are introduced into the elastomeric compound obtained from step (1), and mixed in the material, at controlled temperature, generally at a compound temperature lower than 120 °C, so as to provide the vulcanisable elastomeric compound. The mixing step (2) is also referred to as "productive step".

### DETAILED DESCRIPTION OF THE INVENTION

For the purposes of the present description and of the following claims, the term "phr" (parts per hundreds of rubber) means the parts by weight of a given component of the elastomeric composition by 100 parts by weight of the diene elastomeric polymer.

Unless otherwise indicated, all the percentages are expressed as percentages by weight.

The elastomeric composition for vehicle wheels tyre compounds according to the present invention is characterised by one or more of the following preferred aspects taken alone or in combination with one another.

The elastomeric composition according to the invention comprises 100 phr of at least one diene elastomeric polymer (A) of which preferably at least 20 phr consist of at least one modified diene elastomeric polymer (A1).

The diene elastomeric polymer (A) may be selected from those commonly used in sulfur-vulcanisable elastomeric compositions, which are particularly suitable for producing tyres, i.e. from among solid elastomeric polymers or copolymers with an unsaturated chain having a glass transition temperature (Tg) generally lower than 20 °C, preferably in the range from 0 °C to -110 °C.

These polymers or copolymers may be of natural origin or may be obtained by solution polymerization, emulsion polymerization or gas-phase polymerization of one or more conjugated dienes, optionally mixed with at least one comonomer selected from monoolefins, monovinylarenes and/or polar comonomers in an amount not exceeding 60% by weight.

The conjugated dienes generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof. 1,3-Butadiene and isoprene are particularly preferred.

The monoolefins can be selected from ethylene and α-olefins generally containing from 3 to 12 carbon atoms, such as for example propylene, 1-butene, 1-pentene, 1-hexene, 1-octene or mixtures thereof.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4- (4-phenylbutyl)styrene, and mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile and mixtures thereof.

Preferably, the diene elastomeric polymer (A) may be selected, for example, from cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

The elastomeric composition may possibly comprise at least one polymer of one or more monoolefins with an olefinic comonomer or derivatives thereof. The monoolefins can be selected from: ethylene and α-olefins generally containing from 3 to 12 carbon atoms, such as for example propylene, 1-butene, 1-pentene, 1-hexene, 1-octene or mixtures thereof. The following are preferred: copolymers selected from ethylene and a α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; and mixtures thereof.

The modified diene elastomeric polymer (A1) usable in the composition of the present invention comprises at least one organosilane group, said organosilane group being substituted for silicon by an organic residue comprising at least one heteroatom selected from nitrogen, phosphorus and sulfur and, preferably, no active hydrogen.

By active hydrogen it is meant a hydrogen atom bonded to a more electronegative heteroatom, such as for example N, S, P and the like.

Preferably, said organic residue has a molecular weight lower than 1000 g/mol, more preferably lower than 500 g/mol.

Preferably, said organic residue comprises at least one heterocycle with 5 or more terms, comprising at least one heteroatom selected from nitrogen, phosphorus and sulfur.

Preferably, said heterocycle is a nitrogenous heterocycle.

Said organosilane group is substituted for silicon by at least one alkoxy and/or by at least one alkyl, possibly by both, preferably by at least one alkoxy having from 1 to 20 carbon atoms and/or by at least one alkyl having from 1 to 20 carbon atoms carbon, optionally comprising an aryl from 6 to 20 carbon atoms.

The modified diene elastomeric polymer (A1) usable in the composition of the present invention is a polymer obtainable by anionic polymerization of at least one conjugated diene, optionally together with one or more monovinylaromatic derivatives, using an anionic, mono or polyfunctional polymerization initiator, preferably polyfunctional, and terminating the living polymer by reaction with a modifying product comprising an organosilane group, wherein the silicon is substituted by an organic residue comprising at least one heteroatom selected from nitrogen, phosphorus and sulfur, and by at least one alkoxy and/or at least one alkyl, as defined above.

Suitable diene-modified elastomeric polymers (A1) are those described for example in patents US8946339, US8816014, US9193807, US9644046 in the name of Asahi, in patents US9434792, US9090754 and in application US2014357784 in the name of JSR.

Preferred modified diene elastomeric polymers (A1) are those described for example in patents US8946339 in the name of Asahi and in application US2014357784 in the name of JSR.

The modified polymer (A1) may be prepared by polymerizing a conjugated diene product or copolymerizing a conjugated diene product with an aromatic vinyl product, using an anionic initiator and reacting one end of the living polymer with a modifying product having an organosilane group substituted for silicon, as defined above.

Examples of suitable conjugated dienes are 1,3-butadiene, isoprene, 2,3-dimethyl-1,3-butadiene, 1,3-pentadiene, 3-methyl-1,3-pentadiene, 1,3-heptadiene and 1,3-hexadiene, in particular 1,3-butadiene and isoprene are preferable.

Examples of suitable monovinyl aromatic derivatives can include styrene, p-methylstyrene, α-methylstyrene, vinyl ethylbenzene, vinylxylene and vinyl naphthalene, preferably styrene.

Preferably, the one or more modified elastomeric polymers (A1) are selected from the modified elastomeric polymers and copolymers based on alkylene, preferably based on butadiene (BR), isoprene (IR), isoprene/butadiene (IBR) or styrene/butadiene (SBR).

Preferably, the modified diene elastomeric polymer (A1) is a styrene-butadiene rubber, more preferably a solution-polymerized and modified styrene-butadiene rubber.

In a preferred embodiment, the modified diene elastomeric polymer (A1) comprises from 25% to 50% by weight of styrene monomer and from 30% to 65% of vinyl monomer, more preferably from 30% to 45% of styrene monomer and from 35% to 60% of vinyl monomer.

The anionic polymerization initiator is an organometallic initiator, in particular a mono or polyfunctional organolithium initiator, preferably polyfunctional.

A polyfunctional anionic polymerization initiator may be prepared by reacting a polyvinyl aromatic derivative with an organolithium derivative.

Examples of polyvinyl aromatic derivatives used in the preparation of a polyfunctional anionic polymerization initiator include o-, m- and p-divinylbenzene, o-, m- and p-diisopropenylbenzene, 1,2,4-trivinylbenzene, 1,2-vinyl-3,4-dimethylbenzene, 1,3-divinylnaphthalene, 1,3,3,5-trivinyl-naphthalene, 2,4-divinylbiphenyl, 3,5,4'-trivinylbiphenyl, 1,2-divinyl-3,4-dimethylbenzene and 1,5,6-trivinyl-3,7-diethylnaphthalene. In particular, divinylbenzene and diisopropenylbenzene are preferable and the polyvinyl aromatic derivative may be a mixture of o, m and p-isomers.

Examples of organolithium derivatives are n-butyl lithium, sec-butyl lithium and tert-butyl lithium.

Alternatively, an anionic polymerization initiator may be prepared by reacting the products of formula (1) or (2) reported in patent application U.S. 20140357784 (par. 17) with an alkaline or alkaline earth organometallic product.

The termination modifying product of the polymer comprises an organosilane group, in which the silicon is substituted by an organic residue comprising at least one heteroatom selected from nitrogen, phosphorus and sulfur, and by at least one alkoxy group and/or at least one alkyl.

Preferably, the modifying product is selected from the products of formula (I) described in U.S. 8946339 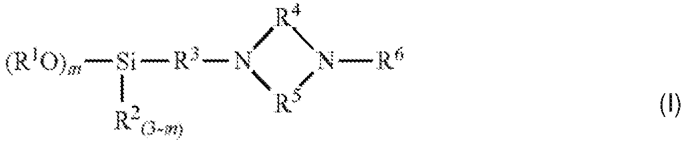 wherein R¹ and R² independently represent an alkyl group having from 1 to 20 carbon atoms, or an aryl group; R³ represents an alkylene group having 1 to 20 carbon atoms; R⁴ and R⁵, equal to or different from each other, represent a hydrocarbon group having 1 to 6 carbon atoms, and together with the two Ns form a ring structure with 5 or more members; R⁶ represents a hydrocarbon group having 1 to 20 carbon atoms, a hydrocarbon group substituted with a heteroatom lacking active hydrogen and having 1 to 20 carbon atoms, or a silyl group triorgane - substituted; and m is an integer equal to 2 or 3;
or of formula (II), again described in U.S. 8946339 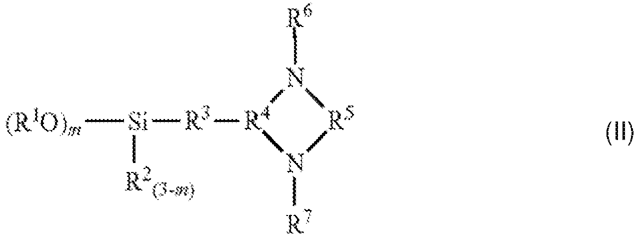 wherein the definitions from R¹ to R⁶ and m are the same as in formula (I) described above; and R⁷ represents a hydrocarbon group with 1-20 carbon atoms, optionally substituted with at least one heteroatom and with no active hydrogen or a triorgane substituted silyl group;
or of formula (III) described in U.S. 8816014 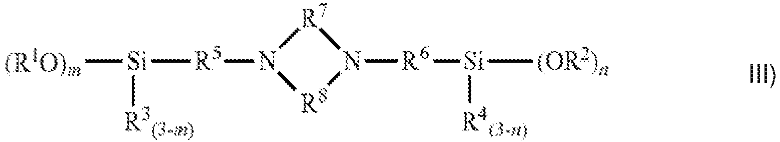 wherein R¹ to R⁴ each independently represents an alkyl group or aryl group having from 1 to 20 carbon atoms; R⁵ and R⁶ each independently represents an alkylene group having 1 to 20 carbon atoms; R⁷ and R⁸ each independently represent a hydrocarbon group having 1 to 6 carbon atoms, and together with the two Ns form a ring structure with 5 or more members; and m and n independently represent an integer equal to 2 or 3;
or of formula (IV) described in U.S. 9193807 and U.S. 9644046 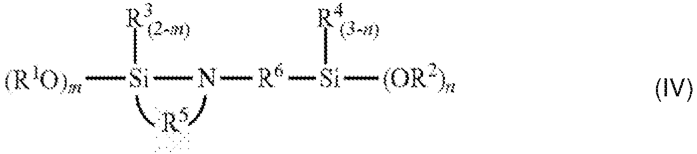 wherein R¹ to R⁴ each independently represents an alkyl group or aryl group with 1-20 carbon atoms; R⁵ represents an alkylene group with 1-10 carbon atoms; R⁶ represents an alkylene group with 1-20 carbon atoms; m is an integer equal to 1 or 2; and n is an integer equal to 2 or 3,
or of formula (V) described in U.S. 2014357784 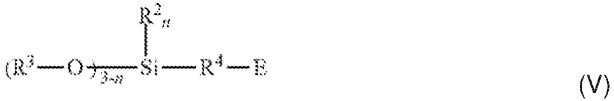 wherein
   E is a functional group comprising one or more atoms selected from N, P and S, does not comprise an active hydrogen atom and is bound to R⁴ by an atom of N, P or S; part or all of the atoms selected from N, P and S are optionally protected with a hydrocarbyl-silyl group in which the three hydrogen atoms of the structure -SiH₃ are each replaced by a hydrocarbyl group;
   R2 and R3 are independently a hydrocarbyl group, preferably a C₁-C₂₀ alkyl or an aryl group from 6 to 20 carbon atoms;
   R⁴ is a hydrocarbilene group, preferably a C1-C20 alkylene; and
   n is an integer from 0 to 2. In the above compounds of formula (I) or (II), the triorgano substituted silyl group refers to a group of general formula -SiR⁸₃, wherein each R⁸, equal or different from the others, represents an organic group, preferably an alkyl.

Preferred polymer termination-modifying products are those specifically described in U.S. 8946339, and U.S. 2014357784.

In particular, preferred modifying products are those described in U.S. 8946339, in paragraph "Modifier" (from line 36, col. 12 to line 38, col. 15) and, in patent application U.S. 2014357784, the products of formula (V) in which E takes on the meanings detailed in par. 67 - 73.

In one embodiment, the modified polymer (A1) is a modified conjugated diene polymer having a structure of formula (VI) or (VII) 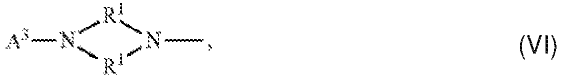 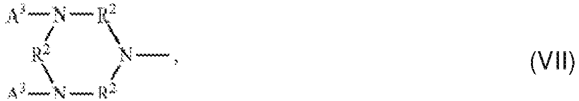 at one end and a structure of formula (VIII) 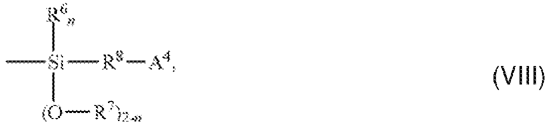 at the other end,
wherein in formulas (VI) and (VII):
   A³ is independently a hydrogen atom or a hydrocarbylsilyl group;
   R¹ and R² are independently a hydrocarbilene groups, and
wherein, in formula (VIII):
   A⁴ is a functional group that has at least one atom selected from N, P and S and is bound to R⁸ by any of the above mentioned atoms N, P and S, so that a part or all of the above mentioned atoms N, P and S of A⁴ are protected by a protective group, wherein the protective group is optionally a hydrocarbylsilyl group in which the three hydrogen atoms of a SiH₃ structure are each replaced by a hydrocarbyl group;
   R⁶ is independently a hydrocarbyl group;
   R⁷ is independently a hydrogen atom or a hydrocarbyl group;
   n is an integer from 0 to 2; is
   R⁸ is a hydrocarbilene group,
   as described in U.S. 9090754 and claimed in claim 5.

In one embodiment, the modified polymer (A1) is a modified conjugated diene polymer having a structure of formula (VI) or (VII) as defined above at one end and a structure of formula (IX) 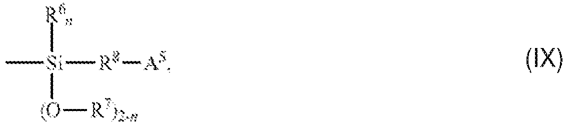 at the other end
wherein, in the formula (IX)
A⁵ is a group in which a functional group, which has at least one atom selected from N, P and S and is bound to R⁸ by any of the above mentioned atoms N, P and S, and is converted into an onium, so that a part or all of the abovementioned atoms N, P and S of A⁵ are protected by a protective group, in which the protective group is optionally a hydrocarbylsilyl group in which the three hydrogen atoms of a SiH₃ structure are each replaced by a hydrocarbyl group;
R⁶, R⁷, n and R⁸ are as defined above,
as described in U.S. 9090754 and claimed in claim 6.

The hydrocarbilene group of formulas (VI) and (VII) includes alkylene, arylene and arylalkylene groups, preferably from C₁ to C₁₀.

The hydrocarbyl group contained in the hydrocarbylsilyl group of formulas (VI), (VII) and (IX) includes alkyl, aryl and aralkyl groups, preferably from C₁ to C₁₀.

Preferably, the modified elastomeric polymer (A1) has a glass transition temperature (Tg) lower than 0 °C, more preferably between -10 °C and -70 °C, even more preferably between -20 °C and -45 °C.

The glass transition temperature Tg can be conveniently measured by using a differential scanning calorimeter (DSC) according to ISO 22768 ("Rubber, Raw - Determination of the glass transition temperatures by differential scanning calorimetry DSC").

Preferably, the modified elastomeric polymer (A1) is "extended oil", that is, it comprises an oil in an amount of between 10 and 50 phr, more preferably between 20 and 45 phr, even more preferably between 20 and 40 phr, per 100 phr of modified elastomeric polymer (A1).

Preferably, the modified elastomeric polymer (A1) is "oil extended" with an oil selected from TDAE (treated distillate aromatic extract), RAE (residual aromatic extract) and SRAE (special residual aromatic extract), more preferably selected from SRAE and TDAE.

In the present composition, unless otherwise indicated, the quantities of elastomeric polymer (modified A1 and unmodified A) expressed in phr refer to the net polymer, i.e. without oil.

Commercial examples of modified elastomeric polymers (A1) are the organosilane-modified S-SBR polymers of Ashai's Tufdene^{™} series and JSR's HPR^{™} series.

Preferably, in the elastomeric composition according to the invention at least 50 phr, more preferably at least 75 phr, even more preferably all 100 phr of the diene elastomeric polymer (A) consist of at least one modified diene elastomeric polymer (A1).

In one embodiment, the elastomeric composition according to the invention comprises from 20 phr to 95 phr, preferably from 50 phr to 95 phr of at least one modified elastomeric polymer (A1), the component to 100 phr consisting of one or more conventional unmodified diene elastomeric polymers (A).

In a preferred embodiment, the elastomeric composition according to the invention comprises 100 phr of at least one modified elastomeric polymer (A1).

In a preferred embodiment, the elastomeric composition according to the invention comprises 100 phr of at least one modified elastomeric polymer (A1) and does not include other diene elastomeric polymers (A).

The elastomeric composition according to the invention may comprise one or more diene-modified elastomeric polymers (A1) in mixture.

In one embodiment, the composition comprises only one modified elastomeric polymer (A1), the amount of which is in accordance with the above preferences.

In one embodiment, the composition comprises two or more modified elastomeric polymers (A1), the summed amounts of which are in accordance with the above preferences.

The elastomeric composition according to the invention may possibly comprise one or more modified diene elastomeric polymers (A2) other than (A1).

The term "modified diene elastomeric polymer (A2) other than (A1)" means a diene elastomeric polymer functionalized by reaction with a modifying product other than the present organosilane group, such as, for example, an elastomeric polymer terminated with imines, carbodiimides, halides of substituted alkyl tin or benzophenones.

The elastomeric composition according to the invention comprises a sulfurized silanized silica (B).

Preferably, the present sulfurized silanized silica (B) is a silica characterized by
- a carbon content of at least 0.5%,
- a sulfur content of at least 0.1%, e
- a pH between 5 and 8,
more preferably by
- a carbon content of at least 1.0%,
- a sulfur content of at least 0.25%,
- a pH between 6 and 7.5.

Preferably, the present sulfurized silanized silica (B) is a silica characterized by
- a carbon content of 1.0 to 10.0%,
- a sulfur content of 0.5 to 4.0%, and
- a pH between 5 and 8,
more preferably by
- a carbon content of 2.0 to 8.0%,
- a sulfur content of 0.45 to 2.0%, and
- a pH between 6 and 7.5.

The carbon and sulfur content of silica is determined by elemental analysis, as described in the present experimental part.

The pH is measured according to the ISO 787-9 method.

Preferably, the present sulfurized silanized silica (B) is characterized by a surface area (BET) measured according to ISO18852 lower than 170 m²/g, more preferably lower than 160 m²/g, 150 m²/g, 140 m²/g or 130 m²/g, even more preferably lower than 120 m²/g, 110 m²/g, 100 m²/g or 90 m²/g.

Sulfurized silanized silica (B) is a silica prepared by reaction of a silica, such as fumed silica, precipitated amorphous silica, wet silica (hydrated silicic acid), anhydrous silica (anhydrous silicic acid), or mixtures thereof, or of a metal silicate, such as aluminium silicate, sodium silicate, potassium silicate, lithium silicate or mixtures thereof, with at least one sulfurized silanizing agent.

Typically, the sulfurized silanized silica (B) is more hydrophobic than the starting non-silanized silica.

Preferably, the sulfurized silanized silica (B) is prepared in the presence of surfactants.

Sulfurized silanizing agents, surfactants and sulfurized silanized silicas (B) suitable for the present purposes are described for example in the following patents:
U.S. 6184408 in the name of Dow Corning, which describes silicas modified with sulfurized silanizing agents such as organosilanes, organosiloxanes and organo disilazanes, substituted with hydrocarbon radicals having mercapto, disulfide or polysulfide functionality;
U.S. 7687107 in the name of PPG, which describes silicas modified with sulfurized silanizing agents such as bis(alkoxysilylalkyl)polysulfides;
U.S. 7569107 in the name of PPG, which describes silicas modified with sulfurized silanizing agents such as organosilanes functionalized on hydrocarbon residues with sulfide, polysulfide or mercapto groups, in the presence of anionic, non-ionic or amphoteric surfactants;
U.S. 9688784 in the name of PPG, which describes silicas modified with sulfurized silanizing agents, in the presence of polymers and anionic, non-ionic or amphoteric surfactants;
U.S. 8846806 in the name of PPG, which describes silicas modified with sulfurized silanizing agents such as mercaptosilanes in the presence of anionic, non-ionic or amphoteric surfactants;
U.S. 2016326374 in the name of Evonik which describes silicas modified with sulfurized silanizing agents, such as sulfur-containing silanes.

The elastomeric composition according to the invention preferably comprises said sulfurized silanized silica (B) in amounts of at least 10 phr, 20 phr, 30 phr or 40 phr, more preferably at least 50 phr, 60 phr, 70 phr, 80 phr, 90 phr or 100 phr.

The elastomeric composition for treads according to the invention preferably comprises from 50 phr to 125 phr, more preferably from 60 phr to 100 phr of at least one sulfurized silanized silica (B).

Preferably, the composition comprises a single sulfurized silanized silica (B) the amount of which is in accordance with the above preferences.

Preferably, the composition comprises two or more sulfurized silanized silicas (B), the summed amounts of which are in accordance with the above preferences.

A commercial example of suitable sulfurized silanized silica (B) is PPG Agilon 400 silica.

The elastomeric composition for tyre compounds according to the present invention comprises at least one vulcanising agent (C).

Preferably, the composition comprises at least 0.2 phr, 0.5 phr, 0.8 phr or 1 phr of at least one vulcanising agent (C).

Preferably, the composition comprises from 0.1 to 10 phr, from 0.2 to 10 phr, from 1 to 10 phr or from 1.5 to 5 phr of at least one vulcanising agent (C).

The at least one vulcanising agent (C) is preferably selected from sulfur, or alternatively, sulfur-containing molecules (sulfur donors), such as for example bis(trialcoxysilyl)propyl]polysulphides and mixtures thereof.

Preferably, the vulcanising agent (C) is sulfur, preferably selected from soluble sulfur (crystalline sulfur), insoluble sulfur (polymeric sulfur), and oil-dispersed sulfur and mixtures thereof.

A commercial example of vulcanising agent (C) suitable for use in the elastomeric composition of the invention is 67% sulfur known by the commercial name of Crystex OT33 from Eastman.

In a preferred embodiment, the elastomeric composition according to the present invention comprises at least
100 phr of at least one diene elastomeric polymer (A) of which at least 80 phr of at least one modified diene elastomeric polymer (A1),
50 to 100 phr of at least one silanized sulfurized silica (B),
0.5 to 2 phr of at least one vulcanising agent (C).

Preferably, the elastomeric composition according to the invention comprises at least 0.05 phr, more preferably at least 0.1 phr or 0.5 phr, even more preferably at least 1 phr or 2 phr of at least one silane coupling agent (D).

Preferably, the elastomeric composition according to the invention comprises from 0.1 phr to 20.0 phr or from 0.5 phr to 10.0 phr, even more preferably from 1.0 phr to 5.0 phr of at least one silane coupling agent (D).

Preferably, said coupling agent is a silane coupling agent (D) selected from those having at least one hydrolysable silane group which can be identified, for example, by the following general formula (X):

(R')₃Si-CₙH₂ₙ-X (X)

wherein the R' groups, equal or different from each other, are selected from: alkyl, alkoxy or aryloxy groups or from halogen atoms, provided that at least one of the R' groups is an alkoxy or an aryloxy group; n is an integer of between 1 and 6, ends included; X is a group selected from: nitrose, mercapto, amino, epoxide, vinyl, imide, chloro, -(S)ₘCₙH₂ₙ-Si-(R')₃ and -S-COR', wherein m and n are integers of between 1 and 6, ends included and the R' groups are as defined above.

Particularly preferred silane coupling agents are bis(3-triethoxysilylpropyl)tetrasulfide and bis(3-triethoxysilylpropyl)disulphide. Said coupling agents may be added as such or in mixture with an inert filler (such as carbon black) so as to facilitate their incorporation into the elastomeric composition. An example of the silane coupling agent (D) is TESPT: bis(3-triethoxysilylpropyl)tetrasulphide Si69 marketed by Evonik.

The silane coupling agent (D) imparts to the compound a greater elongation load against a lower hardness, as shown in Example 1D, resulting in an even more performing compound in terms of wet grip and wear and tear resistance.

The elastomeric composition according to the invention may further comprise one or more additional ingredients, commonly used in the field, such as for example conventional reinforcing fillers, vulcanization activators, accelerants and retardants, plasticising oils, resins, antioxidant and/or antiozonating agents (anti-aging agents), waxes, adhesives and the like.

For example, the elastomeric composition according to the present invention, in order to further improve the workability of the compound, may further comprise at least one plasticising oil.

The amount of plasticiser is preferably from 1 phr to 80 phr, preferably from 10 phr to 70 phr, more preferably from 30 phr to 50 phr.

The term "plasticising oil" means a process oil derived from petroleum or a mineral oil or a vegetable oil or a synthetic oil or combinations thereof.

The plasticising oil may be a process oil derived from petroleum selected from paraffins (saturated hydrocarbons), naphthenes, aromatic polycyclic and mixtures thereof.

Examples of suitable process oils derived from petroleum are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract ), RAE (Residual Aromatic Extract) known in the industry.

The plasticising oil may be an oil of natural or synthetic origin derived from the esterification of glycerol with fatty acids, comprising glycerine triglycerides, diglycerides, monoglycerides or mixtures thereof.

Examples of suitable vegetable oils are sunflower, soybean, linseed, rapeseed, castor and cotton oil.

The plasticising oil may be a synthetic oil selected from among the alkyl or aryl esters of phthalic acid or phosphoric acid.

The elastomeric composition according to the present invention may further comprise at least one resin.

The resin, if used in the composition, is a non-reactive resin, preferably selected from the group comprising hydrocarbon resins, phenolic resins, natural resins and mixtures thereof.

The amount of resin may be from 0 phr to 80 phr, preferably from 10 phr to 40 phr. The elastomeric composition according to the invention may optionally comprise at least one wax.

The wax may be for example a petroleum wax or a mixture of paraffins.

Commercial examples of suitable waxes are the Repsol N-paraffin mixture and the Antilux^{®} 654 microcrystalline wax from Rhein Chemie.

The wax may be present in the elastomeric composition of the invention in an overall amount generally from 0.1 phr to 20 phr, preferably from 0.5 phr to 10 phr, more preferably from 1 phr to 5 phr.

The elastomeric composition according to the present invention may comprise at least one reinforcing filler.

The present composition may preferably comprise from 1 phr to 150 phr, from 5 phr to 120 phr or from 10 phr to 90 phr of at least one reinforcing filler.

Preferably, the reinforcing filler is selected from carbon black, a white filler, silicate fibres or mixtures thereof.

In an embodiment, said reinforcing filler is a white filler selected from among hydroxides, oxides and hydrated oxides, salts and hydrated salts of metals, silicates fibres or mixtures thereof. Preferably, said white filler is silica.

Preferably, said silica may be present in the elastomeric composition in an amount ranging between 1 phr and 100 phr, more preferably between 30 phr and 70 phr. Commercial examples of suitable conventional silica are Zeosil 1165 MP from Solvay, and Ultrasil 7000 GR from Evonik.

In one embodiment, said reinforcing filler is carbon black.

Preferably, said carbon black is present in the elastomeric composition in an amount ranging between 1 phr and 100 phr, preferably between 5 phr and 70 phr.

Preferably, the carbon black is selected from those having a surface area not smaller than 20 m²/g, preferably larger than 50 m²/g (as determined by STSA - statistical thickness surface area according to ISO 18852:2005).

The carbon black may be, for example, N234 marketed by Birla Group (India) or by Cabot Corporation.

In the present elastomeric composition, the vulcanising agent (C) may be used together with adjuvants such as vulcanization activators, accelerants and/or retardants known to those skilled in the art.

The elastomeric composition according to the invention may optionally comprise at least one vulcanisation activating agent.

The vulcanisation activating agents suitable for use in the present elastomeric composition are zinc compounds, in particular ZnO, ZnCO₃, zinc salts of saturated or unsaturated fatty acids containing from 8 to 18 carbon atoms, which are preferably formed in situ in the elastomeric composition by reaction of ZnO and of the fatty acid, as well as Bi₂O₃, PbO, Pb₃O₄, PbO₂, or mixtures thereof. For example, zinc stearate is used, preferably formed in situ in the elastomeric composition, by ZnO and fatty acid, or magnesium stearate, formed by MgO, or mixtures thereof. The vulcanization activating agents may be present in the elastomeric composition of the invention in amounts preferably from 0.2 phr to 15 phr, more preferably from 1 phr to 5 phr.

Preferred activating agents derive from the reaction of zinc oxide and stearic acid. An example of activator is the product Aktiplast ST marketed by Rheinchemie. The elastomeric composition according to the invention may further comprise at least one vulcanisation accelerant.

Vulcanisation accelerants that are commonly used may be for example selected from dithiocarbamates, guanidines, thioureas, thiazoles, sulphenamides, sulphenimides, thiurams, amines, xanthates, or mixtures thereof.

Preferably, the accelerant agent is selected from mercaptobenzothiazole (MBT), N-cyclohexyl-2-benzothiazol-sulphenamide (CBS), N-tert-butyl-2-benzothiazol-sulphenamide (TBBS) and mixtures thereof.

Commercial examples of accelerants suitable for use in the present elastomeric composition are N-cyclohexyl-2-benzothiazyl-sulphenamide Vulkacit^{®} (CBS or CZ), and N-terbutyl 2-benzothiazil sulphenamide, Vulkacit^{®} NZ/EGC marketed by Lanxess.

Vulcanization accelerants may be used in the present elastomeric composition in an amount preferably from 0.05 phr to 10 phr, preferably from 0.1 phr to 7 phr, more preferably from 0.5 phr to 5 phr.

The elastomeric composition according to the invention may optionally comprise at least one vulcanisation retardant agent.

The vulcanisation retardant agent suitable for use in the present elastomeric composition is preferably selected from urea, phthalic anhydride, N-nitrosodiphenylamine N-cyclohexylthiophthalimide (CTP or PVI) and mixtures thereof.

A commercial example of a suitable retardant agent is N-cyclohexylthiophthalimide VULKALENT G of Lanxess.

The vulcanisation retardant agent may be present in the present elastomeric composition in an amount of preferably from 0.05 phr to 2 phr.

The present elastomeric composition may comprise one or more vulcanisation retardant agents as defined above in a mixture.

The elastomeric composition according to the invention may optionally comprise at least one antioxidant agent.

The antioxidant agent is preferably selected from N-isopropyl-N'-phenyl-p-phenylenediamine (IPPD), N-(1,3-dimethyl-butyl)-N'-phenyl-p-phenylenediamine (6PPD), N,N'-bis-(1 ,4-dimethyl-pentyl)-p-phenylenediamine (77PD), N,N'-bis-(1-ethyl-3-methyl-pentyl)-p-phenylenediamine (DOPD), N,N'-bis-(1 ,4-dimethyl-pentyl)-p-phenylenediamine, N,N'-diphenyl-p-phenylenediamine (DPPD), N,N'-ditolyl-p-phenylenediamine (DTPD), N,N'-di-beta-naphthyl-p-phenylenediamine (DNPD), N,N'-bis(1-methylheptyl)-p-phenylenediamine, N,N'-Di-sec-butyl-p-phenylenediamine (44PD), N-phenyl-N'-cyclohexyl-p-phenylenediamine, N-phenyl-N'-1-methylheptyl-p-phenylenediamine and the like and mixtures thereof, preferably it is N-1 ,3-dimethylbutyl-N'-phenyl-p-phenylenediamine (6-PPD).

A commercial example of a suitable antioxidant agent is 6PPD from Solutia/Eastman or Santoflex produced by Flexsys.

The antioxidant agent may be present in the elastomeric composition in an overall amount preferably from 0.1 phr to 20 phr, preferably from 0.5 phr to 10 phr.

A further aspect of the present invention is elastomeric compound for tyres for vehicle wheels, green or at least partially vulcanized obtained by mixing and possibly vulcanizing the elastomeric composition according to the invention.

The present elastomeric compound may be prepared according to a process which typically comprises one or more mixing steps in at least one suitable mixer.

In one embodiment, the elastomeric compound is prepared according to a process which comprises
- a mixing step (1) which comprises mixing and possibly heating to a mixing temperature between 25 °C and 150 °C, in at least one suitable mixer, at least one modified diene elastomeric polymer (A1), at least one sulfurized silanized silica (B), and optionally, one or more of the other ingredients of the composition with the exception of the vulcanising agent (C),
   to yield a non-vulcanisable elastomeric compound (m1);
- a mixing step (2) which comprises incorporating by mixing into the non-vulcanizable elastomeric compound (m1) the at least one vulcanising agent (C), and optionally, the remaining ingredients of the composition, at a mixing temperature not exceeding 120 °C, to give a vulcanizable elastomeric compound (m2), and
- a step of unloading (3) of the vulcanisable elastomeric compound (m2).

The mixing step (1) may comprise multiple intermediate processes during which one or more of the additives are incorporated, followed by further processing. This step, which does not involve the addition of the vulcanising agent (C), is also referred to as the non-productive step.

This step may comprise a "chewing step", that is an initial step during which the one or more conventional (A) and/or modified (A1) elastomeric polymers are mechanically processed, possibly hot, in order to form the elastomeric mass and make it more processable and homogeneous. In this step, the polymers are generally processed, possibly with plasticisers, lowering the viscosity thereof and increasing the exposed surface thereof, thus making it easier to incorporate additives, in particular fillers.

The processing of the components may be performed in one or more suitable mixers, for example in an open mixer of the "open-mill" type or an internal mixer of the type with tangential rotors (Banbury^{®}) or with interpenetrating rotors (intermix), or in continuous mixers of the Ko-Kneader^{™} type (Buss^{®}) or of the twin-screw or multi-screw type.

After one or more processing stages of step (1), the at least one vulcanising agent (C), possibly vulcanization accelerants and retardants, are incorporated into the non-vulcanizable elastomeric compound (m1), if not already added in step (1), to give the vulcanizable elastomeric compound (m2) (production step 2).

The vulcanisable elastomeric compound thus prepared is then typically used for the preparation of one or more tyre components, and can be vulcanised according to standard procedures.

The vulcanized compound, obtained by vulcanization of the elastomeric composition according to the invention, is characterized by a lower hardness, as evidenced by the lower IRHD values shown in Table 5 compared to similar known reference compounds, and by a lower dynamic elastic modulus E'. It follows that when the present compound is applied in the tread of a tyre, it imparts better grip on the wet to it.

Preferably, the present compound, vulcanized at 150 °C for 30 minutes, has an IRHD hardness lower than at least 15%, more preferably lower than at least 20%, with respect to the hardness of a reference compound such as that described in Table 5 - comprising an elastomeric polymer other than that modified (A1) and a conventional silica other than (B) - the hardness being measured according to the ISO 48:2007 standard.

The vulcanized compound, obtained by vulcanization of the elastomeric composition according to the invention, is characterized by a dynamic elastic modulus at 23 °C not higher than that of a reference compound such as that described in Table 5.

In particular, the present compound vulcanized at 150 °C for 30 minutes has a dynamic elastic modulus at 23 °C (E') lower than at least 20%, preferably at least 25% with respect to that of the reference compound described in Table 5, being the module E' measured according to the method described in the present experimental part.

At the same time, the present vulcanized compound substantially maintains the static mechanical properties as indicated by the almost constant values of Ca3 (load for an elongation of 300% expressed in MPa), predictors of good wear resistance and high mileage.

In particular, the present compound, vulcanized at 150 °C for 30 minutes, has an elongation load of 300% at 23 °C expressed in MPa (Ca3) equal to at least 90% of that of a reference compound such as described in Table 5, preferably comparable, more preferably higher than at least 5%, being the Ca3 load measured according to the method described in the present experimental part.

In conclusion, the present compound is advantageously characterized by an optimal balance between a high elongation load and a lower hardness, a balance that is reflected in the Ca3 vs IRHD ratio at 23 °C (load/hardness ratio) which is higher than the reference compounds, as shown in Table 5.

In particular, the present compound vulcanized at 150 °C for 30 minutes has a ratio between the load (Ca3) and the IRHD hardness at 23 °C preferably higher than 1.15, more preferably higher than 1.2, even more preferably higher at 1.3 or 1.5, this ratio being calculated from the values of Ca3 and IRHD at 23 °C measured respectively as indicated above.

A further aspect of the present invention is a tyre component for vehicles comprising, preferably consisting of, a green or at least partially vulcanized elastomeric compound, according to the invention.

Preferably, the tyre component according to the invention consists of the vulcanisable compound according to the invention (green component) or of the vulcanised compound obtained by vulcanisation thereof (vulcanised component). Preferably, the tyre component according to the invention is selected from tread band, underlayer, anti-abrasive layer, sidewall, sidewall insert, mini-sidewall, under-liner, rubber layers, bead filler, bead reinforcing layers (flipper), bead protective layers (chafer) and leaflet, more preferably is selected from the tread band and underlayer.

Preferably, said green tread band comprises at least 50%, preferably at least 70% or 90% or 95% or consists of 100% of an elastomeric compound according to the invention.

The elastomeric compound according to the invention is preferably used for the manufacture according to traditional processes of tread bands for tyres for vehicle wheels.

A further aspect of the present invention is a tyre for vehicle wheels comprising at least one component of a tyre according to the invention as indicated above.

Preferably, the tyre for vehicle wheels of the invention comprises at least one tyre component which consists of a vulcanisable elastomeric compound according to the invention (green component) or of a vulcanised elastomeric compound obtained by vulcanisation thereof.

Preferably, said component is a tread band.

In one embodiment, a tyre for vehicles according to the present invention comprises at least
- a carcass structure comprising at least a carcass ply having opposite lateral edges associated to respective bead structure;
- possibly a pair of sidewalls applied to the lateral surfaces of the carcass structure, respectively, in an axially outer position;
- possibly a belt structure applied in radially outer position with respect to the carcass structure;
- a tread band applied in a radially outer position to said carcass structure or, if present, a belt structure,
- possibly a layer of elastomeric material, referred to as under-layer, applied in a radially inner position with respect to said tread band,
wherein at least one component, preferably the tread band, comprises, or preferably consists of, the elastomeric compound according to the invention.

In one embodiment, the tyre according to the invention is a tyre for high performance vehicles (HP, SUV and UHP), wherein at least one component comprises, or preferably consists of, the elastomeric compound according to the invention.

In one embodiment, the tyre according to the invention is a tyre for cars, preferably high performance.

In an embodiment, the tyre according to the invention is a tyre for heavy vehicles wheels in which at least one component, preferably selected from under-layer, sidewall and tread band, comprises, or preferably consists of, the elastomeric compound according to the invention.

The tyre according to the invention may be a tyre for two, three or four-wheeled vehicles.

The tyre according to the invention can be for summer or winter use or for all seasons.

In a preferred embodiment, the tyre according to the invention is a tyre for motorcycle wheels, preferably for sports or racing motorcycles.

Preferably, the tyre for motorcycle wheels, more preferably for sports or racing motorcycles, comprises the elastomeric compound of the invention at least in the tread band, more preferably the tread band consists of the compound according to the invention.

In one embodiment, the tyre according to the invention is a tyre for bicycle wheels. A tyre for bicycle wheels typically comprises a carcass structure turned around a pair of bead cores at the beads and a tread band arranged in a radially outer position with respect to the carcass structure. Preferably, at least the tread band comprises the elastomeric compound according to the invention.

The Applicant has found that the peculiar properties of the elastomeric composition of the invention - obtainable due to the presence of the modified diene elastomeric polymer (A1) together with the sulfurized silanized silica (B) - allow the manufacture of a tyre characterized by the improvement of both the driving performance on the wet and of duration.

The tyre according to the present invention can be produced according to a process which comprises:
- building components of a green tyre on at least one forming drum;
- shaping, moulding and vulcanising the tyre;
wherein building at least one of the components of a green tyre comprises:
- manufacturing at least one green component comprising, or preferably consisting of, the vulcanisable elastomeric compound of the invention.

### BRIEF DESCRIPTION OF THE FIGURES

With reference to the accompanying figures:
- Figure 1 schematically shows a semi-sectional view of a tyre for vehicle wheels according to the present invention;
- Figure 2 shows a radar graph relating to some properties (IRHD hardness, load at a 300% elongation, modulus E' and Tan delta at 23 and 70 °C) of reference elastomeric compounds (Ref.), comparative (Ex. 1A and Ex. 1B) and according to the invention (Ex. 1C, Ex. 1D, Ex. 1E);
- Figure 3 shows a radar graph relating to some properties (driving precision, tread pattern drainage, feeling of safety, handling, readiness for use, grip) of tyres comprising the reference elastomeric compounds (PN-RIF) and according to the invention (PN-C and PN-D) in the tread.

### DESCRIPTION OF A TYRE ACCORDING TO THE INVENTION

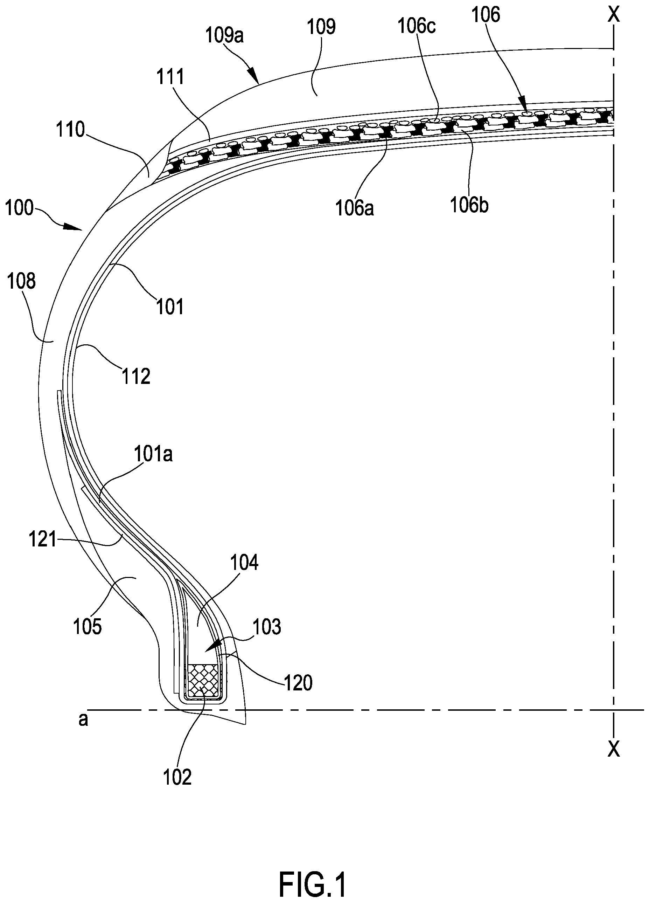

A tyre for vehicle wheels according to the invention, comprising at least one component comprising the present elastomeric compound, is illustrated in radial half-section in Figure 1.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

Tyre (100) for four-wheeled vehicles comprises at least one carcass structure, comprising at least one carcass layer (101) having respectively opposite end flaps engaged with respective annular anchoring structures (102), referred to as bead cores, possibly associated to a bead filler (104).

The tyre area comprising the bead core (102) and the filler (104) forms a bead structure (103) intended for anchoring the tyre onto a corresponding mounting rim, not shown.

The carcass structure is usually of radial type, i.e. the reinforcing elements of the at least one carcass layer (101) lie on planes comprising the rotational axis of the tyre and substantially perpendicular to the equatorial plane of the tyre. Said reinforcing elements generally consist of textile cords, such as rayon, nylon, polyester (for example polyethylene naphthalate, PEN). Each bead structure is associated to the carcass structure by folding back of the opposite lateral edges of the at least one carcass layer (101) around the annular anchoring structure (102) so as to form the so-called carcass flaps (101A) as shown in Figure 1.

In one embodiment, the coupling between the carcass structure and the bead structure can be provided by a second carcass layer (not shown in Figure 1) applied in an axially outer position with respect to the first carcass layer.

An anti-abrasive strip (105) possibly made with elastomeric material is arranged in an outer position of each bead structure (103).

The carcass structure is associated to a belt structure (106) comprising one or more belt layers (106a), (106b) placed in radial superposition with respect to one another and with respect to the carcass layer, having typically textile and/or metallic reinforcing cords incorporated within a layer of elastomeric material.

Such reinforcing cords may have crossed orientation with respect to a direction of circumferential development of the tyre (100). By "circumferential" direction it is meant a direction generally facing in the direction of rotation of the tyre.

At least one zero-degree reinforcing layer (106c), commonly known as a "0° belt", may be applied in a radially outermost position to the belt layers (106a), (106b), which generally incorporates a plurality of elongated reinforcing elements, typically metallic or textile cords, oriented in a substantially circumferential direction, thus forming an angle of a few degrees (such as an angle of between about 0° and 6°) with respect to a direction parallel to the equatorial plane of the tyre, and coated with an elastomeric material.

A tread band (109) comprising the elastomeric compound according to the invention is applied in a position radially outer to the belt structure (106).

Moreover, respective sidewalls (108) of elastomeric material are applied in an axially outer position on the lateral surfaces of the carcass structure, each extending from one of the lateral edges of tread (109) at the respective bead structure (103).

In a radially outer position, the tread band (109) has a rolling surface (109a) intended to come in contact with the ground. Circumferential grooves, which are connected by transverse notches (not shown in Figure 1) so as to define a plurality of blocks of various shapes and sizes distributed over the rolling surface (109a), are generally made on this surface (109a), which for simplicity is represented smooth in Figure 1. An under-layer (111) of elastomeric material can be arranged between the belt structure (106) and the tread band (109).

A strip consisting of elastomeric material (110), commonly known as "mini-sidewall", can optionally be provided in the connecting zone between the sidewalls (108) and the tread band (109), this mini-sidewall being generally obtained by co-extrusion with the tread band (109) and allowing an improvement of the mechanical interaction between the tread band (109) and the sidewalls (108). Preferably, the end portion of the sidewall (108) directly covers the lateral edge of the tread band (109).

In the case of tubeless tyres, a rubber layer (112), generally known as "liner", which provides the necessary impermeability to the inflation air of the tyre, can also be provided in a radially inner position with respect to the carcass layer (101).

The rigidity of the tyre sidewall (108) can be improved by providing the bead structure (103) with a reinforcing layer (120) generally known as flipper or additional strip-like insert.

Flipper (120) is a reinforcing layer which is wound around the respective bead core (102) and the bead filler (104) so as to at least partially surround them, said reinforcing layer being arranged between the at least one carcass layer (101) and the bead structure (103). Usually, the flipper is in contact with said at least one carcass layer (101) and said bead structure (103).

Flipper (120) typically comprises a plurality of textile cords incorporated within a layer of elastomeric material.

The reinforcing annular structure or bead (103) of the tyre may comprise a further protective layer which is generally known by the term of "chafer" (121) or protective strip and which has the function of increasing the rigidity and integrity of the bead structure (103).

Chafer (121) usually comprises a plurality of cords incorporated within a rubber layer of elastomeric material. Such cords are generally made of textile materials (such as aramide or rayon) or metal materials (such as steel cords).

A layer or sheet of elastomeric material can be arranged between the belt structure and the carcass structure. The layer can have a uniform thickness. Alternatively, the layer may have a variable thickness in the axial direction. For example, the layer may have a greater thickness close to its axially outer edges with respect to the central (crown) zone.

Advantageously, the layer or sheet can extend on a surface substantially corresponding to the extension surface of said belt structure.

In a preferred embodiment, a layer of elastomeric material, referred to as under-layer, can be placed between said belt structure and said tread band, said under-layer preferably extending on a surface substantially corresponding to the extension surface of said belt structure.

The elastomeric compound according to the present invention can advantageously be incorporated in one or more of the above tyre components, preferably at least in the tread band.

According to an embodiment not shown, the tyre may be a tyre for motorcycle wheels which is typically a tyre that has a straight section featuring a high tread camber.

According to an embodiment not shown, the tyre may be a tyre for bicycle wheels. According to an embodiment not shown, the tyre may be a tyre for heavy transport vehicle wheels, such as trucks, buses, trailers, vans, and in general for vehicles in which the tyre is subjected to a high load. Preferably, such a tyre is adapted to be mounted on wheel rims having a diameter equal to or greater than 17.5 inches for directional or trailer wheels.

The building of the tyre (100) as described above, can be carried out by assembling respective semi-finished products adapted to form the components of the tyre, on a forming drum, not shown, by at least one assembling device.

At least a part of the components intended to form the carcass structure of the tyre can be built and/or assembled on the forming drum. More particularly, the forming drum is intended to first receive the possible liner, and then the carcass structure. Thereafter, devices non shown coaxially engage one of the annular anchoring structures around each of the end flaps, position an outer sleeve comprising the belt structure and the tread band in a coaxially centred position around the cylindrical carcass sleeve and shape the carcass sleeve according to a toroidal configuration through a radial expansion of the carcass structure, so as to cause the application thereof against a radially inner surface of the outer sleeve.

After the building of the green tyre, a moulding and vulcanisation treatment is generally carried out in order to determine the structural stabilisation of the tyre through cross-linking of the elastomeric compositions, as well as to impart a desired tread pattern on the tread band and to impart any distinguishing graphic signs at the sidewalls.

### EXPERIMENTAL PART

The following examples are now provided for merely illustrative and non-limiting purposes of the present invention.

### EXAMPLES

Where not indicated otherwise, in the present experimental part the components of the compositions are expressed in phr (parts per hundreds of rubber).

Unless otherwise indicated, the percentages are percentages by weight.

### Silicas

The following Table 1 shows some features and properties of the silicas used in the preparation of compounds for treads of the comparative tests and according to the invention of the Examples:

**Table 1 (Silica S)**

| | Sample | BET (m²/g) | S (% pp) | C (% pp) | pH |
|---|---|---|---|---|---|
| S1 | Zeosil 1165 MP (Reference) | 160 | 0.0 | 0.0 | 6.5 |
| S2 | Agilon 400 (Sulfurized silanized silica B) | 75 | 0.8 | 4.0 | 6.8 |

S1 (reference silica) Zeosil 1165 MP: is a non-derivatized easily dispersible (HD) silica obtained from sand and precipitated with sulfuric acid, marketed by Solvay in the form of microbeads (MP).

S2 (silica (B) for use in compositions according to the invention) Agilon 400: is a commercial easily dispersible (HD) sulfurized silanized silica, produced by PPG in the form of granules (GR).

The surface area (BET) of the silicas was measured according to ISO18852 with Micromeritics Tristar 2 plus. The samples underwent a pre-degassing treatment at 170 °C for 2 hours under nitrogen flow.

The pH was measured following the ISO 787-9 method.

The sulfur and carbon content was determined by elemental analysis under the following conditions.

Elemental analyzer: MACRO Cube Analyzer, manufactured by Elementar.

The procedure involved converting species C and S to CO₂ and SO₂, respectively, by combustion at 1150 °C, adsorption and desorption from a purge and trap column, followed by measurement with a thermal conductivity detector.

The samples were weighed in a tin capsule and introduced into the combustion column by means of an autosampler together with an adequate amount of oxygen. After combustion, the resulting gases were carried by a flow of helium to a copper-filled layer, then flowed through selective absorption columns with traps that separated the gases. Finally, the separated gases were detected by the thermal conductivity detector.

### Modified polymers

The following Table 2 shows some features and properties of the modified polymers used in the preparation of compounds for treads of the Examples:

**Table 2 (P-modified polymers)**

| | Sample | St (%) | Vi (%) | Oil (phr) | Mooney (MU) | Tg (°C) | MW g/mol |
|---|---|---|---|---|---|---|---|
| P1 | Tufdene E680 (Ref.) | 34 | 58 | 37.5 | 80 | -28 | 1000000 - 1300000 |
| P2 | Tufdene XF354 | 35 | 57 | 37.5 | 82 | -26 | 900000-1000000 |
| P3 | GTNP 7000 | 40 | 40 | 0.0 | 73 | -21 | 130000-170000 |

wherein
St% indicates the percentage by weight of styrene monomer while the percentage by weight of butadiene monomer in the polymer is its complement to 100;
Vi (%) indicates the percentage by weight of vinyl units in the polymer with respect to the diene portion;
Oil (phr) indicates the oil content (SRAE and TDAE in P1, TDAE in P2) of the commercial product.

Mooney (MU) is the Mooney viscosity (ML 1 + 4 at 120 °C) of the commercial product measured according to the ISO 289-1:2005 standard.

Tg indicates the glass transition temperature measured with a differential scanning calorimeter (DSC) according to ISO 22768 of the commercial product.

MW refers to the weight average molecular weight in g/mol.
P1: Tufdene E680 is a commercial styrene-butadiene (SBR) elastomer from Asahi Kasei, synthesized in solution and modified at the end of the chain with nitrogen groups and hydroxides but not with silyl.
P2: Tufdene XF354 is a commercial styrene-butadiene (SBR) elastomer from Asahi Kasei, continuously synthesized and modified at the beginning and end of the polymer chain, using a polyfunctional anionic polymerization initiator and terminating with nitrogen organosilane groups.
P3: GTNP 7000 is a commercial styrene-butadiene elastomer (SBR) from the HPR family of JSR, synthesized in solution and modified at the beginning and end of the polymer chain with multiple functional groups including silicon, nitrogen, phosphorus and hydroxyls, as highlighted from the analyzes of Table 3.

The average molecular weight of the modified polymers P was determined by GPC (Gel Permeation Chromatography) according to the following method.

The procedure involved the dissolution of the polymers in THF (tetrahydrofuran), with a concentration equal to 1 mg/ml.

The analysis was carried out at 30 °C using THF as eluent, with a flow of 1 ml/min in a chromatographic system with a three-column bench (Shodex KF802.5, KF805 and KF806, stationary phase: styrene divinylbenzene copolymer, dimensions: 8.0 mm I.D. x 300 mm). Molecular weight determination was performed using a Multiple Angle Light Scattering (MALS) detector that directly measures the size and mass of macromolecules, without the need for a standard.

The following Table 3 summarizes some features and properties of the modified polymers shown in Table 2 reported by the suppliers:

**Table 3 (features of modified polymers)**

| | P1 | P2 | P3 |
|---|---|---|---|
| Trade name | Tufdene E680 | Tufdene XF354 | GTNP 7000 |
| Presence of: | Comparative | invention | Invention |
| Silicon | No | Yes | Yes |
| Nitrogen | Yes | Yes | Yes |
| sulfur | No | Yes | No |
| Phosphorus | No | No | Yes |
| Hvdroxyls | Yes | No | Yes |
| Different functional groups at the same end | No | No | Yes |
| Functionalization at both ends of the chain | No | Yes | Yes |
| Functionalized initiator | No | Yes | Yes |

| | | | |
|---|---|---|---|
| Nitrogen and Sulfur were confirmed by elemental analysis with the method described above. | | | |

### Example 1

Table 4 below shows the elastomeric compound recipes for tread reference (REF.), comparative (Ex. 1A and 1B) and according to the invention (Ex. 1C, 1D and 1E):

**Table 4: elastomeric compositions (phr)**

| | REF. | EX. 1A | EX. 1B | EX. 1C | EX. 1D | EX, 1E |
|---|---|---|---|---|---|---|
| | | Comp. | Comp. | Inv. | Inv. | Inv. |
| P1 Tufdene E680 | 100 | - | 100 | - | - | - |
| P2 Tufdene XF354 | - | 100 | - | 100 | 100 | - |
| P3 GTNP70000 | - | - | - | - | - | 100 |
| S1 Silica Zeosil Ref. | 70 | 70 | - | - | - | - |
| S2 Silica Aqilon 400 | -- | - | 70 | 70 | 70 | 70 |
| Silane | 11.2 | 11.2 | - | - | 2.8 | - |
| Carbon black | 5 | 5 | 5 | 5 | 5 | 5 |
| Oil | 47.5 | 47.5 | 47.5 | 47.5 | 47.5 | 47.5 |
| Stearic acid | 1.5 | 1.5 | 1.5 | 1.5 | 1.5 | 1.5 |
| Resin | 20 | 20 | 20 | 20 | 20 | 20 |
| Zinc oxide | 2 | 2 | 2 | 2 | 2 | 2 |
| Protective agent 1 | 0.5 | 0.5 | 0.5 | 0.5 | 0.5 | 0.5 |
| Protective agent 2 | 0.5 | 0.5 | 0.5 | 0.5 | 0.5 | 0.5 |
| Accelerant | 3 | 3 | 3 | 3 | 3 | 3 |
| sulfur | 1.5 | 1.5 | 1.5 | 1.5 | 1.5 | 1.5 |

wherein
Silane is TESPT, bis(3-triethoxysilylpropyl)tetrasulfide - Si69 (Evonik).
Carbon black is N234 (Birla Group).
Oil is Treated Distillate Aromatic Extract, Vivatec 500 produced by Hansen & Rosenthal KG.
Resin is indene styrene resin with Tg 90 °C, manufactured by Ruetgers GmbH. Zinc Oxide is the zinc oxide manufactured by Zincoloxides.
Stearic Acid Radiacid 444 manufactured by Oleon NV;
Protective Agent 1 is polymerised 2,2,4-trimethyl-1,2-dihydroquinoline (TMQ) Vulkanox HS/LG manufactured by Lanxess GmbH.
Protective Agent 2 is phenyl-p-phenylenediamine, Santoflex (6PPD) manufactured by Eastman Chemical Co.
Accelerant is N-cyclohexyl-2-benzothiazylsulfenamide manufactured by Rhein Chemie GmbH.
Sulfur is Multisperse S-IS70P (Omya SpA)

As can be seen from Table 4:
- the compound of the reference example (REF.) contained the reference polymer P1, a high percentage of filler and plasticiser and a standard sulfur-based vulcanizing package;
- in the compound of Example 1A (comparative), the reference polymer P1 was completely replaced with the modified elastomeric polymer P2; the compound of this example follows the teaching of document U.S. 8946339;
- in the compound of Example 1B (comparative), the conventional silica S1 was replaced with the modified silica S2 and the silane was eliminated;
- in the compound of Example 1C (invention), both the reference polymer P1 and the conventional silica S1 were replaced with P2 and S2 respectively, again in the absence of silane;
- in the compound of Example 1D (invention), silane was added to the formulation of Example 1C in an amount equal to 2% by weight with respect to the silica;
- in the compound of Example 1E (invention), both the reference polymer P1 and the conventional silica S1 were replaced with P3 and S2 respectively, in the absence of silane;

The elastomeric compositions of Table 4 were prepared according to a conventional process comprising three successive mixes in a batch mixer (Banbury^{®}).

The elastomeric polymer, silica, plasticiser (oil), silane if present, resin and stearic acid were fed and mixed in a Banbury^{®} batch mixer (model Pomini 11-D), which operated under the following conditions:
capacity: 200 l
feeding: 180-190 kg;
unloading temperature: 140-150 °C;
mixing time: 5 minutes;
rotor speed: 40 rpm;

### Pressure: ambient

The elastomeric composition obtained from the first mixing, zinc oxide, carbon black, 6-PPD and TMQ were subsequently fed to the same Banbury^{®} described above and subjected to a further mixing step under the following conditions:
feeding: 180-190 kg;
unloading temperature: 100 °C;
mixing time: 2-2.5 minutes;
rotor speed: 25-30 rpm;

### Pressure: ambient

The elastomeric composition thus obtained (m1), the sulfur and the CBS were subsequently fed to the same Banbury^{®} described above and subjected to a final mixing step under the following conditions:
feeding: 180-190 kg;
unloading temperature: 100 °C;
mixing time: 2-2.5 minutes;
rotor speed: 25-30 rpm;

### Pressure: ambient.

The elastomeric composition produced at the end of the third mixing (m2) was then unloaded and cooled in air to a temperature of about 25 °C.

### Evaluation of the properties of elastomeric compositions

Table 5 below shows the values of some static and dynamic properties of the compounds in Table 4 (Ex. 1A-1E) reparameterized considering 100% the corresponding values shown by the reference compound (REF.):

**Table 5**

| | REF. | EX.1A | EX.1B | EX.1C | EX.1D | EX. 1E |
|---|---|---|---|---|---|---|
| | | Comp. | Comp. | Inv. | Inv. | Inv. |
| IRHD 23°C | 100% | 100% | 66% | 74% | 78% | 65% |
| CA3 23°C | 100% | 115% | 72% | 92% | 105% | 101% |
| E' 23°C | 100% | 101% | 58% | 64% | 71% | 49% |
| E' 70°C | 100% | 102% | 59% | 66% | 70% | 64% |
| Tan D 23°C | 100% | 92% | 94% | 83% | 87% | 77% |
| Tan D 70°C | 100% | 90% | 83% | 75% | 75% | 55% |
| CA3/IRHD 23°C | 1.00 | 1.15 | 1.10 | 1.24 | 1.35 | 1.55 |

wherein
IRHD is the hardness at 23 °C expressed in IRHD degrees
CA3 is the load for a 300% elongation expressed in MPa at 23 °C
E 23 °C is the dynamic elastic modulus at 23 °C expressed in MPa
E 70°C is the dynamic elastic modulus at 70°C expressed in MPa
Tan D 23 °C is the dissipation factor at 23 °C
Tan D 70°C is the dissipation factor at 70°C
CA3/IRHD is the ratio between load and hardness at 23 °C.

The static mechanical properties were measured at 23 °C according to the ISO 37:2005 standard.

In particular, the load was measured for an elongation of 300% (CA3). Tensile tests were performed on vulcanized ring specimens at 151 °C for 30 minutes (Ring Tensile Test 23 °C).

The hardness in IRHD degrees (23 °C) was measured according to the ISO 48:2007 standard, on samples of the elastomeric materials mentioned above, vulcanised at 151 °C for 30 minutes.

The dynamic mechanical properties were measured using an Instron dynamic device in traction-compression mode according to the following method. A sample of each vulcanised elastomeric composition having a cylindrical shape (length = 25 mm; diameter = 14 mm), with pre-load compression up to 25% of the longitudinal deformation with respect to the initial length and maintained at the predetermined temperature (equal to 23°C or 70°C) for the whole duration of the test, was subjected to a dynamic sinusoidal strain having an amplitude of ±3.5% with respect to the length under pre-load, with a frequency of 100 Hz.

The dynamic mechanical properties were expressed in terms of dynamic elastic modulus (E') and Tan delta (dissipation factor). The Tan delta value was calculated as a ratio of the viscous modulus (E") to the elastic modulus (E').

The compound of Example 1A showed a better interaction between the polymer P2 (Tufdene XF354) and the conventional silica S1 (Zeosil) which resulted in an elongation load of 300% (Ca3) at 23 °C of 115% and in a reduction of about 10% of the hysteresis at both temperatures, compared to the reference example. The high hardness values and dynamic modules of the compound, however, were predictive in the tread of a less wide tyre footprint and therefore of a worse grip thereof on the wet.

Example 1B demonstrated how the use of modified S2 silica alone (AGILON 400), in the absence of P2 polymer and silanizer, induced a significant decrease in all the mechanical properties of the compound (IRHD: 66%, Ca3: 72% and E': about 60% with respect to the reference), an index of poor compatibility and unsatisfactory homogenization of that silica in the elastomeric matrix.

Example 1C according to the invention differed from Example 1B in the incorporation in the compound of the modified elastomeric polymer P2 (Tufdene XF354) in substitution of the polymer P1 (Tufdene E680). The mechanical properties showed a strong interaction between the modified silica and the modified elastomeric polymer which resulted in an increase of the Ca3 load almost at the reference level, with the maintenance of the hardness at 74% and the dynamic modulus at about 65%. The hardness and dynamic modulus values lower than the reference were advantageous as they were predictive of a better wet grip with the same wear resistance.

The compound of Example 1D differed from that of Example 1C in the addition of silane at 2% by weight with respect to silica. From the properties of the compound of Example 1D shown in Table 5, it could be concluded that the addition of the silane improved the interaction between the functional groups of the modified elastomeric polymer (P2) and the modified silica (S2), helping to increase the load at elongation (CA3) more significantly than the other mechanical properties.

The compound of Example 1E differed from that of Example 1C in the substitution of the modified polymer P2 (Tufdene XF354) with the modified polymer P3 (GTNP7000).

The features of the compounds according to the invention, characterized by an increase in load and a decrease in hardness, are confirmed even more with the polymer P3 associated with silica S2, suggesting a further improvement in terms of wet grip and wear resistance in the tread application.

As can be appreciated from the values shown in Table 5, the ratio between CA3 and IRHD was higher than 1.10 for the compounds according to the invention, indicating the achievement of optimal properties in terms of wet grip and good wear and tear resistance.

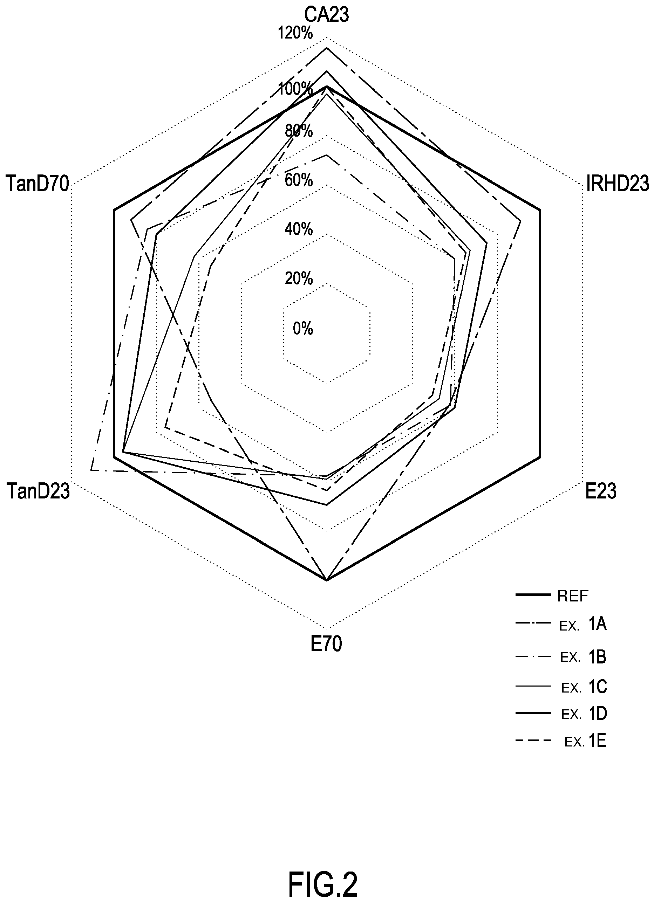

Figure 2 clearly shows the trend of the IRHD hardness, of the load at a 300% elongation, of the E' module and of the Tan delta for the aforementioned reference compounds (Ref.), comparative (Ex. 1A and Ex. 1B) and according to the invention (Ex. 1C, Ex. 1D, Ex. 1E). It is clear that in the compounds according to the invention a rather signifcant increase in Ca3 was obtained - predictive of an increased resistance to tear and wear - compared to a reduction in hardness and modulus E', predictive of a better grip on the wet.

### Example 2

### Tyres comprising elastomeric compositions in the tread and their performance on the road (drive tests)

Rear tyres for high displacement motorcycles were produced with a tread band pattern with a void/solid ratio of 36% prepared by vulcanization of the elastomeric compositions of Table 4 and subjected to drive tests.

The "void/solid ratio" means the ratio between the overall surface of the grooves on the tyre tread band and the surface of the entire tread band.

In particular, the compounds of Examples 1C and 1D according to the invention were used to respectively produce a tread band C (in which the polymer P1 Tufdene E680 of the reference was replaced with the modified elastomeric polymer P2 Tufdene XF354, compound of the example 1C) and a tread band D, additionally comprising 2% of silane to improve the mechanical properties (compound of example 1D).

These tread bands were incorporated into tyres, referred to herein as PN-C and PN-D respectively, compared in drive tests with tyres instead comprising the reference compound (PN-RIF).

All tyres were rear tyres of size 200/60 ZR17, mounted on a 6.0J rim and inflated to a pressure of 2 bar.

The tests were carried out by equipping a BMW S1000RR STOCK motorcycle and a YAMAHA R1 STK motorcycle.

Behaviour tests on wet road surfaces and wear tests were carried out on at least two tyres of each type for each motorcycle.

### Behaviour test on wet asphalt

The driving behaviour test, in wet conditions, was carried out on predefined routes closed to traffic. By simulating some typical manoeuvres, such as changing lanes, overtaking, slalom between skittles, entering and exiting corners, performed at a constant speed, and in acceleration and deceleration, the tyre performance were evaluated by the test driver giving a numerical evaluation of its behaviour during those manoeuvres.

In particular, the following parameters were evaluated:
(a) Driving accuracy
(b) Drainage of the tread pattern
(c) Safety feeling
(d) Manoeuvrability
(e) Readiness for use
(f) Grip

From the driving behaviour tests it has been shown that the compounds of Examples 1C and 1D imparted to the tread an optimum level of hardness coupled with good resistance, resulting overall in better performance than the reference.

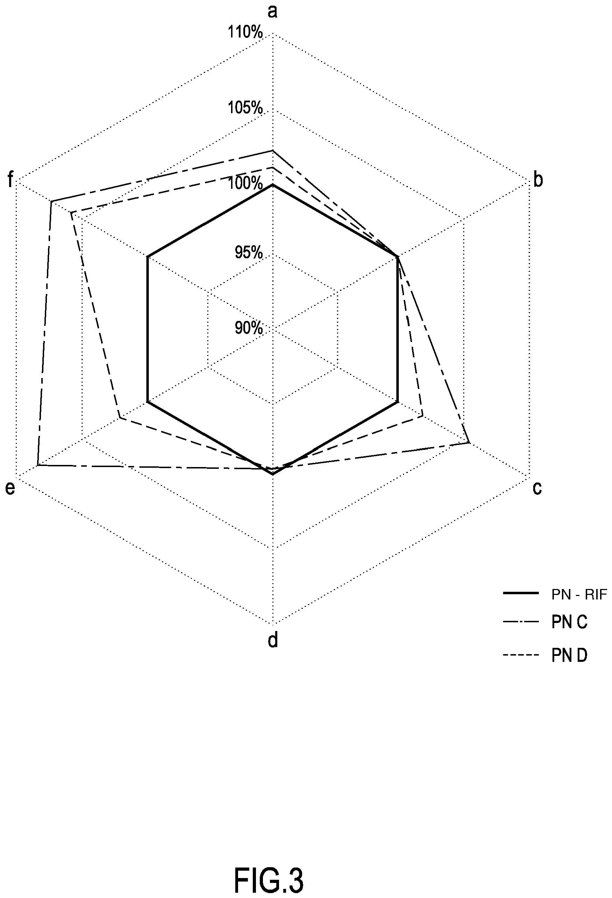

Figure 3 shows the trend of the parameters of (a) driving precision, (b) drainage of the tread pattern, (c) feeling of safety, (d) manoeuvrability, (e) readiness for use and (f) grip of the aforementioned reference tyres (PN-RIF) and according to the invention (PN-C and PN-D).

As can be seen from the radar graph of Figure 3, in the tyres according to the invention (PN-C and PN-D) there was a significant increase in the driving precision (a) and grip (f) with respect to the reference. Furthermore, both tyres according to the invention (PN-C and PN-D) showed an increase in the feeling of safety (c) and in the readiness for use (e).

The results of the drive tests are shown in the following Table 6, where the values of the scores were reparameterized by setting the values for the reference tyre PN-RIF (tread composition Ref.) to be 100:

**Table 6**

| | Driving tests | PN-REF | PN-C | PN-D |
|---|---|---|---|---|
| | | Comp | Inv | Inv |
| (a) | (a) Driving accuracy | 100 | 102 | 101 |
| (b) | Drainage of the pattern | 100 | 100 | 100 |
| (c) | Feeling of safety | 100 | 105 | 102 |
| (d) | Manoeuvrability | 100 | 99 | 99 |
| (e) | Readiness for use | 100 | 109 | 102 |
| (f) | Grip | 100 | 108 | 106 |

In table 6 relating to the driving test results, an increase in the value with respect to 100 indicates an improvement with regard to that parameter (e.g. 109 vs 100 in readiness for use means that the tyre performs better, i.e. it is faster and easier to reach its maximum performance).

### Observation of tyre wear after road tests

The tyre wear was evaluated both qualitatively and quantitatively. The tests were carried out on 5 tyres of each type, on a 3 km long track, with a controlled watering system to maintain a constant veil of water and in conditions of ambient temperature of about 12 °C and track of about 10 °C. The covers were evaluated after 15 laps in total.

In particular, the qualitative test considered the aspect of the cover according to the invention with respect to the reference one at the end of the test session.

A visual comparison was made by two technicians in which the wear pattern of the tread compound was evaluated according to the following scale:
+ Uniform wear
++ Presence of slightly anomalous surface roughness (graining)
+++ Presence of deep tears in the tread compound (tearing)

The results of these observations are reported in the following Table 7:

**Table 7**

| PN-REF | PN-C | PN-D |
|---|---|---|
| Comp | Inv | Inv |
| ++ | ++ | + |

The tyres according to the invention PN-C and, especially PN-D, showed comparable (PN-C) or lower (PN-D) wear compared to the reference. In particular, the reference had a slight grain, similar to that of the tyre according to the invention PN-C. The wear of the tyre PN-D was much more uniform than that of the reference. The quantitative test of tyre wear, carried out in comparison with the reference, after the same session, involved the evaluation of two parameters
- Residual depth of the wear indicator (TWI-tyre Wear Indicator)
- Cover weight

The residual depth parameter was measured in millimetres with a centesimal calliper by calculating the difference in depth of the wear indicator between the new cover and the cover after use. This difference was then compared with that of the reference cover (PN-REF).

The weight parameter of the cover was measured in grams by calculating the difference in weight between the new cover and after use. This difference was then compared with that of the reference cover (PN-REF). The quantitative evaluation was expressed as an average value, excluding the highest and lowest value from the calculation.

The results of the quantitative wear test are shown in the following Table 8, where the values were reparameterized by setting those for the reference tyre PN-RIF (tread composition Ref.) to be 100:

**Table 8**

| Test | PN-REF | PN-C | PN-D |
|---|---|---|---|
| | Comp | Inv | Inv |
| Residual depth of the hollow bottom | 100 | 96 | 107 |
| Cover weight | 100 | 95 | 111 |

In conclusion, the tyres PN-C and, above all, PN-D according to the invention, the latter characterized by the presence of silane in the tread compound, in addition to a superior wet behaviour, showed, with respect to the reference, a comparable or greater resistance to wear.

## Claims

1. Elastomeric composition for vehicle wheels tyre compounds comprising
100 phr of at least one diene elastomeric polymer (A) of which at least 10 phr of at least one modified diene elastomeric polymer (A1),
at least 5 phr of at least one silanized sulfurized silica (B),
at least 0,1 phr of at least one vulcanising agent (C),
wherein said modified diene elastomeric polymer (A1) is a diene elastomeric polymer terminated with at least one organosilane group, said organosilane group being silicon substituted with an organic residue comprising at least one heteroatom selected from nitrogen, phosphorus and sulfur, and with at least one alkoxyl and/or with at least one alkyl, and
wherein said silanized sulfurized silica (B) has a surface area (BET) lower than 190 m²/g measured according to ISO18852.

2. The composition according to claim 1 wherein said modified diene elastomeric polymer (A1) is obtained by terminating the living polymer by reaction with a modifying product selected from the products of formula (I) 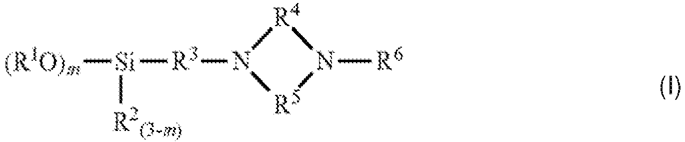 wherein R¹ and R² independently represent an alkyl group having from 1 to 20 carbon atoms, or an aryl group; R³ represents an alkylene group having 1 to 20 carbon atoms; R⁴ and R⁵, equal to or different from each other, represent a hydrocarbon group having 1 to 6 carbon atoms, and together with the two Ns form a ring structure with 5 or more members; R⁶ represents a hydrocarbon group having 1 to 20 carbon atoms, a hydrocarbon group substituted with a heteroatom lacking active hydrogen and having 1 to 20 carbon atoms, or a silyl group triorgane - substituted; and m is an integer equal to 2 or 3;
or of formula (II) 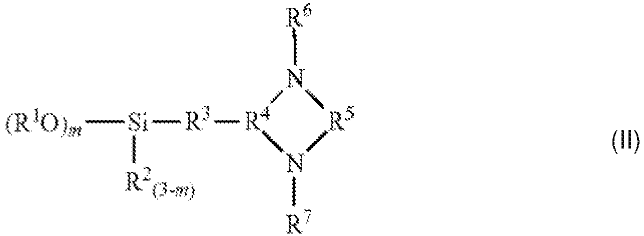 wherein the definitions from R¹ to R⁶ and m are the same as in formula (I); and R⁷ represents a hydrocarbon group with 1-20 carbon atoms, optionally substituted with heteroatom without active hydrogen or a silyl group triorgane substituted;
or of formula (III) 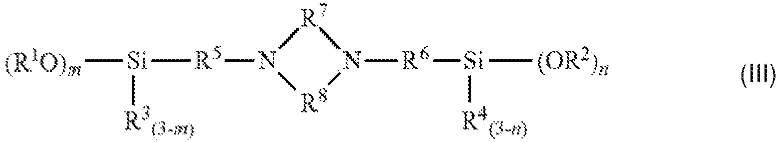 wherein R¹ to R⁴ each independently represents an alkyl group or aryl group having from 1 to 20 carbon atoms; R⁵ and R⁶ each independently represents an alkylene group having 1 to 20 carbon atoms; R⁷ and R⁸ each independently represent a hydrocarbon group having 1 to 6 carbon atoms, and together with the two Ns form a ring structure with 5 or more members; and m and n independently represent an integer equal to 2 or 3;
or of formula (IV) 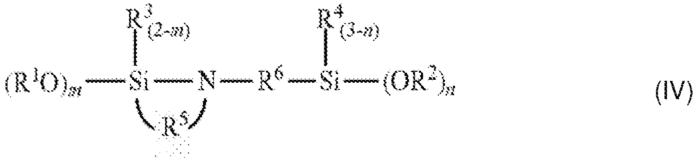 wherein R¹ to R⁴ each independently represents an alkyl group or aryl group with 1-20 carbon atoms; R⁵ represents an alkylene group with 1-10 carbon atoms; R⁶ represents an alkylene group with 1-20 carbon atoms; m is an integer equal to 1 or 2; and n is an integer equal to 2 or 3,
or of formula (V) 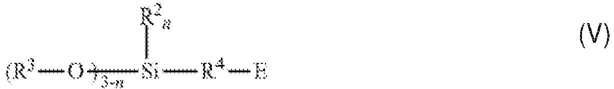 wherein E is a functional group comprising one or more atoms selected from N, P and S, does not comprise an active hydrogen atom and is bound to R⁴ by an atom of N, P or S; part or all of the atoms selected from N, P and S are optionally protected with a hydrocarbyl-silyl group in which the three hydrogen atoms of the structure - SiH₃ are each replaced by a hydrocarbyl group;
R² and R³ are independently a hydrocarbyl group, preferably a C₁-C₂₀ alkyl or an aryl group from 6 to 20 carbon atoms;
R⁴ is a hydrocarbilene group, preferably a C₁-C₂₀ alkylene; and
n is an integer from 0 to 2.

3. The composition according to claim 2 wherein said modified diene elastomeric polymer (A1) is obtained by anionic polymerization of at least one conjugated diene, using a mono or polyfunctional organometallic anionic polymerization initiator.

4. The composition according to claim 1 wherein said modified diene elastomeric polymer (A1) is a diene elastomeric polymer having a structure of formula (VI) or (VII) 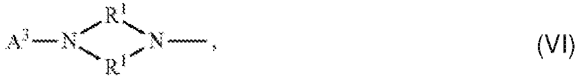 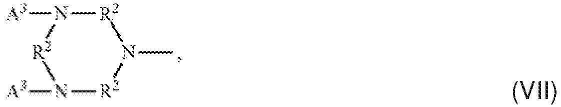 at one end and a structure of formula (VIII) 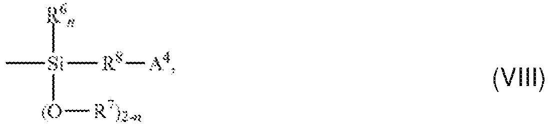 at the other end,
wherein in formulas (VI) and (VII):
A³ is independently a hydrogen atom or a hydrocarbylsilyl group;
R¹ and R² are independently a hydrocarbilene groups, and
wherein, in formula (VIII):
A⁴ is a functional group that has at least one atom selected from N, P and S and is bound to R⁸ by any of the above mentioned atoms N, P and S, so that a part or all of the above mentioned atoms N, P and S of A⁴ are protected by a protective group, wherein the protective group is optionally a hydrocarbylsilyl group in which the three hydrogen atoms of a SiH₃ structure are each replaced by a hydrocarbyl group;
R⁶ is independently a hydrocarbyl group;
R⁷ is independently a hydrogen atom or a hydrocarbyl group;
n is an integer from 0 to 2; is
R⁸ is a hydrocarbilene group;
or
is a diene elastomeric polymer having a structure of formula (VI) or (VII) as defined above at one end and a structure of formula (IX) 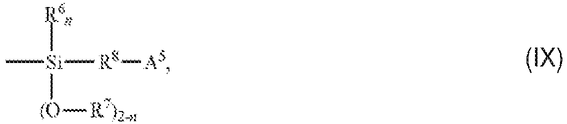 at the other end
wherein, in the formula (IX)
A⁵ is a group in which a functional group, which has at least one atom selected from N, P and S and is bound to R⁸ by any of the above mentioned atoms N, P and S, is converted into an onium, so that a part or all of the abovementioned atoms N, P and S of A⁵ are protected by a protective group, in which the protective group is optionally a hydrocarbylsilyl group in which the three hydrogen atoms of a SiH₃ structure are each replaced by a hydrocarbyl group; and
R⁶, R⁷, n and R⁸ are as defined in formula (VIII).

5. The composition according to any one of the preceding claims comprising at least 50 phr, more preferably at least 75 phr of the at least one modified diene elastomeric polymer (A1).

6. The composition according to any one of the preceding claims, in which said silanized sulfurized silica (B) is a silica **characterized by**
- a carbon content of at least 0.5%,
- a sulfur content of at least 0.1%, e
- a pH between 5 and 8 measured according to ISO 787-9,
preferably from
- a carbon content of at least 1.0%,
- a sulfur content of at least 0.25%, e
- a pH between 6 and 7.5 measured according to ISO 787-9.

7. The composition according to any one of the preceding claims, wherein said sulfurized silanized silica (B) is **characterized by** a surface area (BET), measured according to ISO18852, lower than 170 m² / g, preferably lower than 160 m² / g or 150 m² / g , more preferably lower than 100 m² / g.

8. The composition according to any one of the preceding claims, in which said sulfurized silanized silica (B) is present in an amount of at least 10 phr, 20 phr, 30 phr or 40 phr, preferably of at least 50 phr.

9. The composition according to any one of the preceding claims further comprising at least 0.05 phr, preferably at least 0.5 phr of at least one silane coupling agent (D).

10. The composition according to claim 9 wherein said silane coupling agent (D) is a compound of formula (X)
(R')₃Si-CₙH₂ₙ-X (X)
wherein the R' groups, equal or different from each other, are selected from: alkyl, alkoxy or aryloxy groups or from halogen atoms, provided that at least one of the R' groups is an alkoxy or an aryloxy group; n is an integer of between 1 and 6, ends included; X is a group selected from: nitrose, mercapto, amino, epoxide, vinyl, imide, chloro, -(S)ₘCₙH₂ₙ-Si-(R')₃ and -S-COR', wherein m and n are integers of between 1 and 6, ends included and the R' groups are as defined above.

11. Elastomeric compound for tyres for vehicle wheels, green or at least partially vulcanized, obtained by mixing and possibly vulcanizing the elastomeric composition according to any of the claims from 1 to 10.

12. Vehicle tyre component comprising, preferably consisting of, a green or at least partially vulcanized elastomeric compound, according to claim 11.

13. The tyre component according to claim 12 selected from tread band, underlayer, anti-abrasive layer, sidewall, sidewall insert, mini-sidewall, under-liner, rubber layers, bead filler, bead reinforcing layers (flipper), bead protective layers (chafer) and leaflet, preferably selected from the tread band and underlayer.

14. Tyre for vehicle wheels comprising at least one tyre component as claimed in claim 12 or 13.

15. The tyre according to claim 14 for a high performance motor vehicle or motorcycle, preferably sports or racing.

## Patentansprüche

1. Elastomerzusammensetzung für Reifenverbindungen für Fahrzeugräder, die Folgendes umfasst:
100 phr mindestens eines elastomeren Dienpolymers (A), davon mindestens 10 phr mindestens eines modifizierten elastomeren Dienpolymers (A1),
mindestens 5 phr mindestens einer silanisierten, schwefelhaltigen Kieselsäure (B),
mindestens 0,1 phr mindestens eines Vulkanisationsmittels (C),
wobei das modifizierte elastomere Dienpolymer (A1) ein elastomeres Dienpolymer ist, das mit mindestens einer Organosilangruppe abgeschlossen ist, wobei die Organosilangruppe Silicium ist, das mit einem organischen Rest, der mindestens ein Heteroatom umfasst, das aus Stickstoff, Phosphor und Schwefel ausgewählt ist, und mit mindestens einem Alkoxyl und/oder mit mindestens einem Alkyl substituiert ist, und
wobei das silanisierte, geschwefelte Siliciumdioxid (B) eine Oberfläche (BET) von weniger als 190 m²/g, gemessen nach ISO18852, aufweist.

2. Zusammensetzung nach Anspruch 1, wobei das modifizierte Dienelastomerpolymer (A1) durch Terminierung des lebenden Polymers durch Reaktion mit einem Modifizierungsprodukt erhalten wird, das ausgewählt ist aus den Produkten der Formel (I): 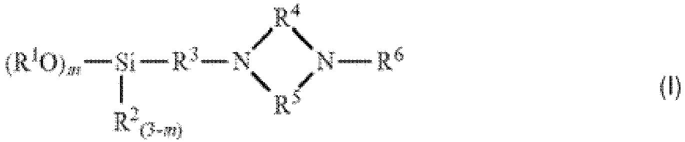 wobei R¹ und R² unabhängig voneinander eine Alkylgruppe mit 1 bis 20 Kohlenstoffatomen oder eine Arylgruppe darstellen; R³ eine Alkylengruppe mit 1 bis 20 Kohlenstoffatomen darstellt; R⁴ und R⁵, die gleich oder verschieden voneinander sind, eine Kohlenwasserstoffgruppe mit 1 bis 6 Kohlenstoffatomen darstellen und zusammen mit den beiden N eine Ringstruktur mit 5 oder mehr Gliedern bilden; R⁶ eine Kohlenwasserstoffgruppe mit 1 bis 20 Kohlenstoffatomen, eine Kohlenwasserstoffgruppe, die mit einem Heteroatom ohne aktiven Wasserstoff substituiert ist und 1 bis 20 Kohlenstoffatome aufweist, oder eine triorganisch substituierte Silylgruppe darstellt; und m eine ganze Zahl gleich 2 oder 3 ist;
oder der Formel (II) 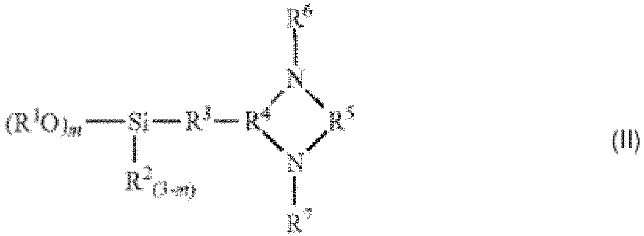 wobei die Definitionen von R¹ bis R⁶ und m die gleichen sind wie in Formel (I); und R⁷ eine Kohlenwasserstoffgruppe mit 1 bis 20 Kohlenstoffatomen, optional substituiert mit einem Heteroatom ohne aktiven Wasserstoff oder einer triorganisch substituierten Silylgruppe, darstellt;
oder der Formel (III) 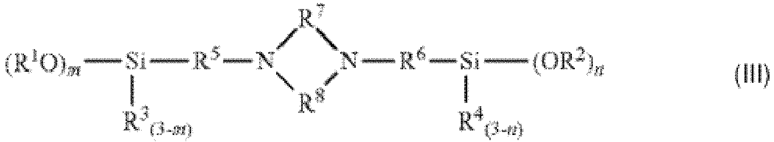 wobei R¹ bis R⁴ jeweils unabhängig voneinander eine Alkylgruppe oder Arylgruppe mit 1 bis 20 Kohlenstoffatomen darstellen; R⁵ und R⁶ jeweils unabhängig voneinander eine Alkylengruppe mit 1 bis 20 Kohlenstoffatomen darstellen; R⁷ und R⁸ jeweils unabhängig voneinander eine Kohlenwasserstoffgruppe mit 1 bis 6 Kohlenstoffatomen darstellen und zusammen mit den beiden N eine Ringstruktur mit 5 oder mehr Gliedern bilden; und m und n unabhängig voneinander eine ganze Zahl gleich 2 oder 3 darstellen;
oder der Formel (IV) 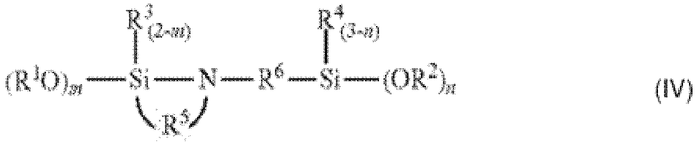 wobei R¹ bis R⁴ jeweils unabhängig voneinander eine Alkylgruppe oder Arylgruppe mit 1 bis 20 Kohlenstoffatomen darstellen; R⁵ eine Alkylengruppe mit 1 bis 10 Kohlenstoffatomen darstellt; R⁶ eine Alkylengruppe mit 1 bis 20 Kohlenstoffatomen darstellt; m eine ganze Zahl gleich 1 oder 2 ist; und n eine ganze Zahl gleich 2 oder 3 ist,
oder der Formel (V) 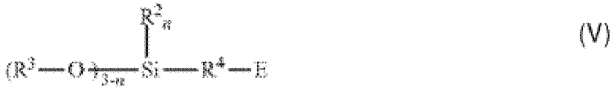 wobei E eine funktionelle Gruppe ist, die ein oder mehrere Atome umfasst, die aus N, P und S ausgewählt sind, kein aktives Wasserstoffatom umfasst und über ein N-, P- oder S-Atom an R⁴ gebunden ist; ein Teil oder alle Atome, die aus N, P und S ausgewählt sind, optional mit einer Hydrocarbyl-Silyl-Gruppe geschützt sind, in der die drei Wasserstoffatome der Struktur - SiH₃ jeweils durch eine Hydrocarbyl-Gruppe ersetzt sind;
R² und R³ unabhängig voneinander eine Hydrocarbylgruppe, vorzugsweise eine C₁-C₂₀-Alkyl- oder eine Arylgruppe mit 6 bis 20 Kohlenstoffatomen, sind;
R⁴ eine Hydrocarbylengruppe, vorzugsweise ein C₁-C₂₀-Alkylen, ist; und
n eine ganze Zahl von 0 bis 2 ist.

3. Zusammensetzung nach Anspruch 2, wobei das modifizierte elastomere Dienpolymer (A1) durch anionische Polymerisation von mindestens einem konjugierten Dien unter Verwendung eines mono- oder polyfunktionellen organometallischen anionischen Polymerisationsinitiators erhalten wird.

4. Zusammensetzung nach Anspruch 1, wobei das modifizierte elastomere Dienpolymer (A1) ein elastomeres Dienpolymer ist, das eine Struktur der Formel (VI) oder (VII) 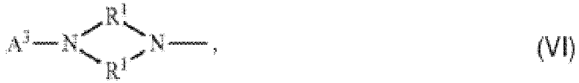 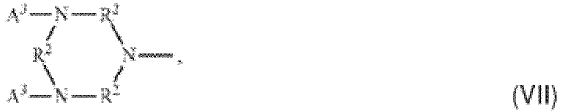 an einem Ende und eine Struktur der Formel (VIII) 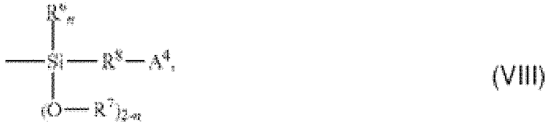 an dem anderen Ende aufweist,
wobei in den Formeln (VI) und (VII):
A³ unabhängig ein Wasserstoffatom oder eine Hydrocarbylsilylgruppe ist;
R¹ und R² unabhängig voneinander eine Hydrocarbilengruppe sind, und
wobei in Formel (VIII):
A⁴ eine funktionelle Gruppe ist, die mindestens ein Atom, ausgewählt aus N, P und S, aufweist und an R⁸ durch eines der oben genannten Atome N, P und S gebunden ist, so dass ein Teil oder alle der oben genannten Atome N, P und S von A⁴ durch eine Schutzgruppe geschützt sind, wobei die Schutzgruppe optional eine Hydrocarbylsilylgruppe ist, in der die drei Wasserstoffatome einer SiH3-Struktur jeweils durch eine Hydrocarbylgruppe ersetzt sind;
R⁶ unabhängig eine Hydrocarbylgruppe ist;
R⁷ unabhängig ein Wasserstoffatom oder eine Hydrocarbylgruppe ist;
n eine ganze Zahl von 0 bis 2 ist;
R⁸ eine Hydrocarbilengruppe ist;
oder
ein elastomeres Dienpolymer ist, das eine Struktur der Formel (VI) oder (VII), wie oben definiert, an einem Ende und eine Struktur der Formel (IX) 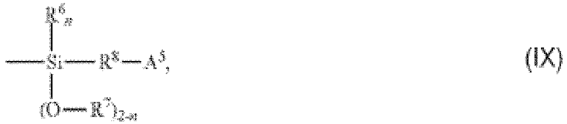 an dem anderen Ende aufweist,
wobei in der Formel (IX)
A⁵ eine Gruppe ist, in der eine funktionelle Gruppe, die mindestens ein Atom, ausgewählt aus N, P und S, aufweist und über eines der oben genannten Atome N, P und S an R⁸ gebunden ist, in ein Onium umgewandelt ist, so dass ein Teil oder alle der oben genannten Atome N, P und S von A⁵ durch eine Schutzgruppe geschützt sind, wobei die Schutzgruppe optional eine Hydrocarbylsilylgruppe ist, in der die drei Wasserstoffatome einer SiH₃-Struktur jeweils durch eine Hydrocarbylgruppe ersetzt sind; und
R⁶, R⁷, n und R⁸ wie in Formel (VIII) definiert sind.

5. Zusammensetzung nach einem der vorhergehenden Ansprüche, die mindestens 50 phr, vorzugsweise mindestens 75 phr, des mindestens einen modifizierten Dien-Elastomer-Polymers (A1) umfasst.

6. Zusammensetzung nach einem der vorhergehenden Ansprüche, bei der die silanisierte, geschwefelte Kieselsäure (B) eine Kieselsäure ist, die **gekennzeichnet ist durch**
- einen Kohlenstoffgehalt von mindestens 0,5 %,
- einen Schwefelgehalt von mindestens 0,1 %,
- einen pH-Wert zwischen 5 und 8, gemessen nach ISO 787-9, vorzugsweise von
- einen Kohlenstoffgehalt von mindestens 1,0%,
- einen Schwefelgehalt von mindestens 0,25%,
- einen pH-Wert zwischen 6 und 7,5, gemessen nach ISO 787-9.

7. Zusammensetzung nach einem der vorhergehenden Ansprüche, wobei die geschwefelte silanisierte Kieselsäure (B) durch eine nach ISO 18852 gemessene Oberfläche (BET) von weniger als 170 m²/g, vorzugsweise weniger als 160 m²/g oder 150 m²/g, besonders bevorzugt weniger als 100 m²/g gekennzeichnet ist.

8. Zusammensetzung nach einem der vorhergehenden Ansprüche, in der die geschwefelte silanisierte Kieselsäure (B) in einer Menge von mindestens 10 phr, 20 phr, 30 phr oder 40 phr, vorzugsweise von mindestens 50 phr, vorliegt.

9. Zusammensetzung nach einem der vorhergehenden Ansprüche, die ferner mindestens 0,05 phr, vorzugsweise mindestens 0,5 phr mindestens eines Silankupplungsmittels (D) umfasst.

10. Zusammensetzung nach Anspruch 9, wobei das Silankupplungsmittel (D) eine Verbindung der Formel (X) ist
(R'O)₃Si-CₙH₂ₙ-X (X)
wobei die R'-Gruppen, gleich oder verschieden voneinander, ausgewählt sind aus: Alkyl-, Alkoxy- oder Aryloxygruppen oder aus Halogenatomen, mit der Maßgabe, dass mindestens eine der R'-Gruppen eine Alkoxy- oder eine Aryloxygruppe ist; n eine ganze Zahl zwischen 1 und 6 ist, wobei die Enden enthalten sind; X eine Gruppe ist, ausgewählt aus: Nitrose, Mercapto, Amino, Epoxid, Vinyl, Imid, Chlor, -(S)ₘCₙH₂ₙ-Si-(R')₃ und -S-COR', wobei m und n ganze Zahlen zwischen 1 und 6 sind, einschließlich der Enden, und die R'-Gruppen wie oben definiert sind.

11. Elastomerverbindung für Reifen für Fahrzeugräder, grün oder zumindest teilweise vulkanisiert, erhalten durch Mischen und gegebenenfalls Vulkanisieren der Elastomermischung nach einem der Ansprüche 1 bis 10.

12. Fahrzeugreifenkomponente, die eine grüne oder zumindest teilweise vulkanisierte Elastomermischung nach Anspruch 11 umfasst bzw. vorzugsweise daraus besteht.

13. Reifenkomponente nach Anspruch 12, ausgewählt aus Laufflächenband, Unterlage, Abriebschutzschicht, Seitenwand, Seitenwandeinlage, Mini-Seitenwand, Unterlage, Gummischichten, Wulstfüller, Wulstverstärkungsschichten (Flipper), Wulstschutzschichten (Chafer) und Leaflet, vorzugsweise ausgewählt aus Laufflächenband und Unterlage.

14. Reifen für Fahrzeugräder, der mindestens eine Komponente des Reifens nach Anspruch 12 oder 13 umfasst.

15. Reifen nach Anspruch 14 für ein Hochleistungskraftfahrzeug oder -motorrad, vorzugsweise für den Sport- oder Rennsport.

## Revendications

1. Composition élastomère pour pneumatiques de roues de véhicule comprenant
100 phr d'au moins un polymère élastomère diénique (A) dont au moins 10 phr d'au moins un polymère élastomère diénique modifié (A1),
au moins 5 phr d'au moins une silice sulfurée silanisée (B),
au moins 0,1 phr d'au moins un agent de vulcanisation (C),
dans laquelle ledit polymère élastomère diénique modifié (A1) est un polymère élastomère diénique terminé par au moins un groupe organosilane, ledit groupe organosilane étant du silicium substitué par un résidu organique comprenant au moins un hétéroatome choisi parmi l'azote, le phosphore et le soufre, et par au moins un alcoxyle et/ou avec au moins un alkyle, et
dans lequel ladite silice sulfurée silanisée (B) a une surface spécifique (BET) inférieure à 190 m²/g mesurée selon ISO18852.

2. Composition selon la revendication 1 dans laquelle ledit polymère élastomère diénique modifié (A1) est obtenu par terminaison du polymère vivant par réaction avec un produit modificateur choisi parmi les produits de formule (I) 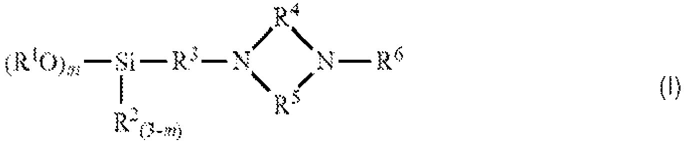 dans laquelle R¹ et R² représentent indépendamment un groupe alkyle ayant de 1 à 20 atomes de carbone, ou un groupe aryle ; R³ représente un groupe alkylène ayant de 1 à 20 atomes de carbone ; R⁴ et R^{5,} égaux ou différents l'un de l'autre, représentent un groupe hydrocarboné ayant 1 à 6 atomes de carbone, et ensemble avec les deux N forment une structure cyclique avec 5 membres ou plus ; R⁶ représente un groupe hydrocarboné ayant de 1 à 20 atomes de carbone, un groupe hydrocarboné substitué par un hétéroatome dépourvu d'hydrogène actif et ayant 1 à 20 atomes de carbone, ou un groupe silyle substitué par triorgano ; et m est un nombre entier égal à 2 ou 3 ;
ou de formule (II) 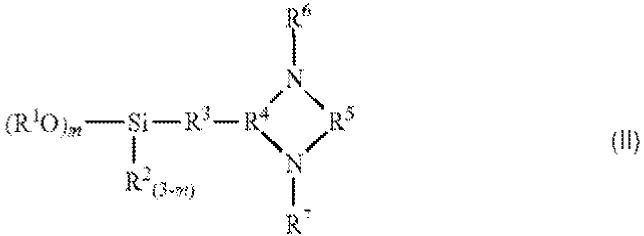 dans laquelle les définitions de R¹ à R⁶ et m sont les mêmes que dans la formule (I) ; et R⁷ représente un groupe hydrocarboné ayant 1 à 20 atomes de carbone, éventuellement substitué par un hétéroatome sans hydrogène actif ou un groupe silyle substitué par triorgano ;
ou de formule (III) 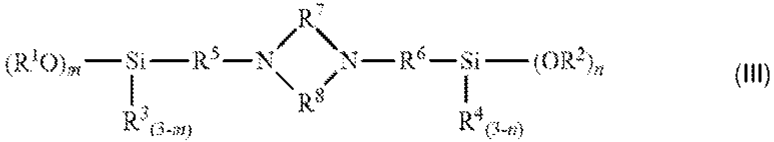 dans laquelle R¹ à R⁴ représentent chacun indépendamment un groupe alkyle ou un groupe aryle ayant 1 à 20 atomes de carbone ; R⁵ et R⁶ représentent chacun indépendamment un groupe alkylène ayant 1 à 20 atomes de carbone ; R⁷ et R⁸ représentent chacun indépendamment un groupe hydrocarboné ayant 1 à 6 atomes de carbone, et ensemble avec les deux N forment une structure cyclique avec 5 membres ou plus ; et m et n représentent indépendamment un nombre entier égal à 2 ou 3 ;
ou de formule (IV) 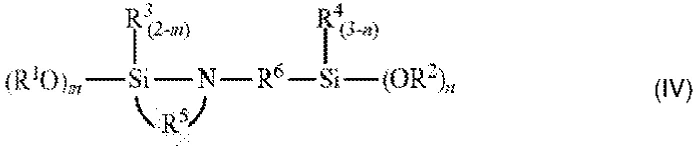 dans laquelle R¹ à R⁴ représentent chacun indépendamment un groupe alkyle ou un groupe aryle ayant 1 à 20 atomes de carbone ; R⁵ représente un groupe alkylène ayant 1 à 10 atomes de carbone ; R⁶ représente un groupe alkylène ayant 1 à 20 atomes de carbone ; m est un nombre entier égal à 1 ou 2 ; et n est un nombre entier égal à 2 ou 3,
ou de formule (V) 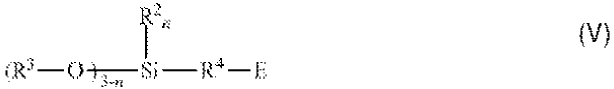 dans laquelle E est un groupe fonctionnel comprenant un ou plusieurs atomes choisis parmi N, P et S, ne comprend pas d'atome d'hydrogène actif et est lié à R⁴ par un atome de N, P ou S ; une partie ou la totalité des atomes choisis parmi N, P et S sont éventuellement protégés par un groupe hydrocarbyl-silyle dans lequel les trois atomes d'hydrogène de la structure -SiHs sont remplacés chacun par un groupe hydrocarbyle ;
R₂ et R₃ sont indépendamment un groupe hydrocarbyle, préférablement un groupe alkyle C₁ -C₂₀ ou un groupe aryle ayant 6 à 20 atomes de carbone ;
R⁴ est un groupe hydrocarbilène, préférablement un alkylène C₁ -C₂₀ ; et
n est un nombre entier de 0 à 2.

3. Composition selon la revendication 2 dans laquelle ledit polymère élastomère diénique modifié (A1) est obtenu par polymérisation anionique d'au moins un diène conjugué, à l'aide d'un amorceur de polymérisation anionique organométallique mono ou polyfonctionnel.

4. Composition selon l'une des revendications 1 à 4 dans laquelle ledit polymère élastomère diénique modifié (A1) est un polymère élastomère diénique ayant une structure de formule (VI) ou (VII) 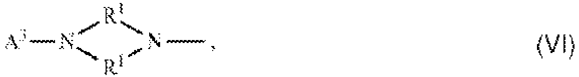 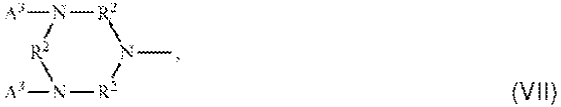 à une extrémité et une structure de formule (VIII) 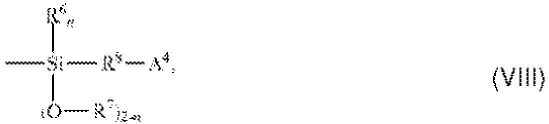 à l'autre extrémité,
dans laquelle dans les formules (VI) et (VII) :
A³ est indépendamment un atome d'hydrogène ou un groupe hydrocarbylsilyle ;
R¹ et R² sont indépendamment des groupes hydrocarbilène, et
dans laquelle, dans la formule (VIII) :
A⁴ est un groupe fonctionnel qui a au moins un atome choisi parmi N, P et S et est lié à R⁸ par l'un des atomes N, P et S mentionnés ci-dessus, de sorte qu'une partie ou la totalité des atomes N mentionnés ci-dessus, P et S de A⁴ sont protégés par un groupe protecteur, dans lequel le groupe protecteur est éventuellement un groupe hydrocarbylsilyle dans lequel les trois atomes d'hydrogène d'une structure SiHs sont chacun remplacés par un groupe hydrocarbyle ;
R⁶ est indépendamment un groupe hydrocarbyle ;
R⁷ est indépendamment un atome d'hydrogène ou un groupe hydrocarbyle ;
n est un nombre entier de 0 à 2 ; est
R⁸ est un groupe hydrocarbilène ;
ou
est un polymère élastomère diénique ayant une structure de formule (VI) ou (VII) telle que définie ci-dessus à une extrémité et une structure de formule (IX) 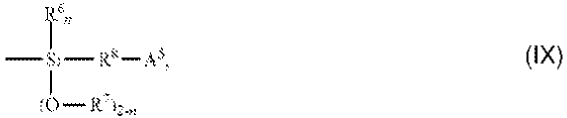 à l'autre extrémité
dans laquelle, dans la formule (IX)
A⁵ est un groupe dans lequel un groupe fonctionnel, qui a au moins un atome choisi parmi N, P et S et est lié à R⁸ par l'un des atomes mentionnés ci-dessus N, P et S, est converti en un onium, de sorte qu'une partie ou la totalité des atomes N, P et S précités de A⁵ sont protégés par un groupe protecteur, dans lequel le groupe protecteur est éventuellement un groupe hydrocarbylsilyle dans lequel les trois atomes d'hydrogène d'une structure SiHs sont remplacés chacun par un groupe hydrocarbyle ; et R⁶, R^{7,} n et R⁸ sont tels que définis dans la formule (VIII).

5. Composition selon l'une quelconque des revendications précédentes comprenant au moins 50 phr, plus préférablement au moins 75 phr de l'au moins un polymère élastomère diénique modifié (A1).

6. Composition selon l'une quelconque des revendications précédentes, dans laquelle ladite silice sulfurée silanisée (B) est une silice **caractérisée par**
- une teneur en carbone d'au moins 0,5 %,
- une teneur en soufre d'au moins 0,1 %,
- un pH compris entre 5 et 8 mesuré selon la norme ISO 787-9, préférablement par
- une teneur en carbone d'au moins 1,0 %,
- une teneur en soufre d'au moins 0,25 %,
- un pH compris entre 6 et 7,5 mesuré selon la norme ISO 787-9.

7. Composition selon l'une quelconque des revendications précédentes, dans laquelle ladite silice silanisée sulfurée (B) est **caractérisée par** une surface spécifique (BET), mesurée selon la norme ISO18852, inférieure à 170 m²/g, préférablement inférieure à 160 m²/g ou 150 m²/ g, plus préférablement inférieur à 100 m ² /g.

8. Composition selon l'une quelconque des revendications précédentes, dans laquelle ladite silice silanisée sulfurée (B) est présente en une quantité d'au moins 10 phr, 20 phr, 30 phr ou 40 phr, préférablement d'au moins 50 phr.

9. Composition selon l'une quelconque des revendications précédentes comprenant en outre au moins 0,05 phr, préférablement au moins 0,5 phr d'au moins un agent de couplage silane (D).

10. Composition selon la revendication 9 dans laquelle ledit agent de couplage silane (D) est un composé de formule (X)
(R')₃Si-CₙH₂ₙ-X (X)
dans laquelle les groupes R', égaux ou différents les uns des autres, sont choisis parmi : les groupes alkyle, alcoxy ou aryloxy ou parmi les atomes d'halogène, à condition qu'au moins l'un des groupes R' soit un groupe alcoxy ou aryloxy ; n est un nombre entier compris entre 1 et 6, extrémités comprises ; X est un groupe choisi parmi : nitrose, mercapto, amino, époxyde, vinyle, imide, chloro, - (S)ₘCₙH₂ₙ-Si-(R')₃ et -S-COR', dans laquelle m et n sont des nombres entiers compris entre 1 et 6, extrémités incluses et les groupes R' sont tels que définis ci-dessus.

11. Composé élastomère pour pneumatiques de roues de véhicule, cru ou au moins partiellement vulcanisé, obtenu par mélange et éventuellement vulcanisation de la composition élastomère selon l'une quelconque des revendications de 1 à 10.

12. Composant de pneumatique pour véhicule comprenant, préférablement constitué par, un composé élastomère cru ou au moins partiellement vulcanisé, selon la revendication 11.

13. Composant de pneumatique selon la revendication 12 choisi parmi la bande de roulement, la sous-couche, la couche anti-abrasive, le flanc, l'insert de flanc, le mini-flanc, la sous-couche, les couches de caoutchouc, le remplissage de talon, les couches de renfort de talon (languette), les couches de protection de talon (bande de renfort) et valve, préférablement choisis parmi la bande de roulement et la sous-couche.

14. Pneumatique pour roues de véhicule comprenant au moins un composant pneumatique selon la revendication 12 ou 13.

15. Pneumatique selon la revendication 14 pour véhicule automobile ou motocyclette à hautes performances, préférablement de sport ou de course.
